# EUROPEAN PATENT APPLICATION

(11) **EP 4 574 888 A1**
(43) Date of publication of application: **25.06.2025**
(21) Application number: 23218930.8
(22) Date of filing: 20.12.2023
(51) Int. Cl.: C08J 11/08, C08F 14/00

(54) **METHOD FOR RECYCLING VINYL HALIDE POLYMER COMPOSITIONS AND USE THEREOF**

(71) Applicant: Vynova Holding S.A., 1313 Luxembourg (LU)
(72) Inventor: COLEMONTS, Christel, 40212 Düsseldorf (DE); LASUYE, Thierry, 62670 Mazingarbe (FR)
(74) Representative: Herzog IP Patentanwalts GmbH

(57) **Abstract**

This invention relates to process of making a vinyl halide polymer comprising at least these steps: i) Providing: a plastic composition comprising the vinyl halide polymer and one or more additives; and a liquid organic phase; ii) Forming a base composition by dissolving the plastic composition at least partially in the liquid organic phase, ; iii) Dividing the base composition into a first composition and a second composition; wherein the second composition has a higher content of the vinyl halide polymer than the first composition; iv) splitting the second composition into a raw product and a recovered organic phase, wherein at least a part thereof is made by membrane; v) Removing further organic phase from the raw product, wherein a solid phase comprising the vinyl halide polymer is obtained; wherein at least a part of step v) is performed by stripping.

## Description

This invention relates to process of making a vinyl halide polymer comprising at least these steps: i) Providing: a plastic composition, wherein the plastic composition comprises the vinyl halide polymer and one or more additives; and a liquid organic phase; ii) Forming a base composition by dissolving the plastic composition at least partially in the liquid organic phase; iii) Dividing the base composition into a first composition and a second composition; wherein the first composition has a higher content of additives than the second composition; and wherein the second composition has a higher content of the vinyl halide polymer than the first composition; iv) splitting the second composition into a raw product and a recovered organic phase, wherein at least a part of the splitting in step iv) is made by membrane separation; v) Removing further organic phase from the raw product, wherein a solid phase comprising the vinyl halide polymer is obtained; wherein at least a part of the removing in step v) is performed by stripping, for example steam stripping or gas stripping. The invention relates further to a vinyl halide polymer obtainable by the process, an article comprising the vinyl halide polymer, a use of the vinyl halide polymer and uses of a membrane.

More specifically, the present invention relates to a recovery of vinyl halide polymers such as PVC from plastic waste which is mixtures, composites of various polymers and possibly further materials or polymer blends.

Most of today's processes to recover or recycle vinyl halide polymer compositions are based on mechanical or chemical processes, as well as combinations of the two. It is clear that mechanical recycling has its merits, but also its limitations.

Other, more chemical recycling methods include chemical and thermal depolymerization. These methods are promising, but suffer from low yields, high energy consumption and solvent-based purification (dissolution-precipitation), which dissolves the polymer to separate it from its additives.

Solvent-based purification is an interesting intermediate solution, as it allows to produce a near-virgin quality polymer, without the energy need of cracking the polymer. Moreover, the additives and the polymer remain intact, so creating a whole range of by-products is avoided which is quite common when chemically recycling the polymer.

Scientific literature is still rather scarce, but there are several pilot scale initiatives which use a solvent-based purification approach, such as the VinyLoop^{®} process, which has been designed for the treatment of PVC-rich materials, primarily soft PVC insulation from electric cables. These waste materials are being fed to the recycling process, resulting in recycled PVC granules. The process is based on the dissolution in an organic solvent, methyl ethyl ketone, with a non-solvent and evaporation-based precipitation of the polymer. To the knowledge of the inventor, this is the most advanced process using solvent-based purification. Further, technical feasibility has been proven in a plant in Ferrara (Italy). Moreover, a validated Life Cycle Analysis study proved the significant reduction in environmental impact, whereby the primary energy demand of the recycled PVC was 46% lower, water-use was 76% lower and the Global warming potential 39% lower, if compared to virgin PVC produced by the conventional route. Nevertheless, the plant had to close its operation in 2018. The primary reason was the increasing product regulation for PVC, and more specifically the REACH classification of the PVC plasticizer di-(2-ethylhexyl) phthalate. The plant was not able to remove such additives successfully in an economically feasible way, stressing the need of a more efficient additives removal step.

Another well-known process is the so-called Creasolv^{®} process developed by Fraunhofer IW in Germany. This process is designed for the recycling of a variety of different material components of films, plastics, textiles, with a special focus on the recycling of polystyrenes, polyesters, and recently also polyolefins, e. g., to recover polyethylene from multilayers. The overall process is typically based on (1) the dissolution of the waste polymeric material (containing the additives) in a solvent, and (2) recovering the purified polymer by the addition of an anti-solvent for the polymer, thus inducing its precipitation while keeping the unwanted additives in solution. The process is claimed to be ecologically friendly, but the details of the solvent/antisolvent are kept trade secret. Further, a Creasolv^{®} process has been designed for the removal of the flame retardant hexabromocyclododecane (HBCD), a persistent organic pollutant and banned since 2015, from polystyrene. This flame retardant is especially present in expandable polystyrene foam applications for insulation ("Styrofoam"), hampering their mechanical recycling.

A (partial) solution to this problem was offered by a modified Creasolv^{®} process which is known as "Poly-StyreneLoop". This process was developed into a pilot plant for extractive removal of HBCD from strictly collected polystyrene (PS) waste. After the solvent extraction and multiple purification unit operations, this process produces recycled PS of an acceptable grade. However, further implementation was stalled due to insolvency of the plant consortium.

There are further initiatives like the so-called PureCycle technology by Procter & Gamble to purify polypropylene at very high temperatures and APK's Newcycle technology to separate polyethylene (PE) from mixtures of PE and polyamide (PA).

However, all these initiatives struggle to make the process efficient to remove additives sufficiently and in a cost-effective way.

### OBJECT

An object of the invention is to overcome at least one of the above challenges at least partially.

An object of the invention is to provide a process for the recycling of vinyl halide polymers which is compliant also with strict regulations, such as REACH.

An object of the invention is to provide a process for the recycling of vinyl halide polymers in a compliant way, though the vinyl halide polymer comprises regulated additives.

An object of the invention is to provide process more efficient to remove additives from plastic compositions comprising vinyl halide polymers, e.g., like poly vinyl chloride.

Another object of the invention is to provide a modified or alternative process more efficient to remove legacy additives, e.g. phthalates of low molecular weight, tin salts, Bisphenol-A and lead salts, from plastic compositions comprising vinyl halide polymers, e.g., like poly vinyl chloride.

Another object of the invention is a process for the recycling of soft vinyl halide polymers.

Another object of the invention is a process for the recycling of rigid vinyl halide polymers.

Another object of the invention is a versatile process for the recycling of vinyl halide polymers.

Another object of the invention is a process for the recycling of vinyl halide polymers which can be used with a wide range of vinyl halide polymers.

Another object of the invention is a process for the recycling of vinyl halide polymers which can be used with vinyl halide polymers having a broad range of additives.

Another object of the invention is a process for the recycling of vinyl halide polymers in which the vinyl halide polymers come from a wide range of origins.

Another object of the invention is a process for the recycling of vinyl halide polymers in which organic additives to the vinyl halide polymer are effectively removed.

Another object of the invention is a process for the recycling of vinyl halide polymers in which inorganic additives to the vinyl halide polymer are effectively removed.

Another object of the invention is a process for the recycling of vinyl halide polymers in which organic and inorganic additives to the vinyl halide polymer are effectively removed.

Another object of the invention is a process for the purification of vinyl halide polymers in which additives to the vinyl halide polymer are removed to content of less than 1 '000 ppm per additive.

Another object of the invention is a process for the recycling of vinyl halide polymers in which organic and inorganic additives to the vinyl halide polymer are effectively and simultaneously removed.

Another object of the invention is a process for the recycling of vinyl halide polymers in which organic and inorganic additives to the vinyl halide polymer are both removed in a single process step.

Another object of the invention is a process for the recycling of vinyl halide polymers in which highly purified vinyl halide polymers are obtained.

Another object of the invention is a process for the recycling of vinyl halide polymers in which the recycling gives highly purified vinyl halide polymers.

Another object of the invention is a process for the recycling of vinyl halide polymer from waste in a way that the additives comprised in the waste vinyl halide polymer are preserved in the recycled vinyl halide polymer.

Another object of the invention is a process for the recycling of vinyl halide polymer from waste so that the vinyl halide polymer is separated from other polymers in the waste.

Another object of the invention is a process for the recycling of vinyl halide polymer from waste so that the vinyl halide polymer is separated from other polymers in the waste, and that additives are preserved in the recycled vinyl halide polymer that were already additives to the vinyl halide polymer in the waste.

Another object of the invention is a process for the recycling of vinyl halide polymers which comprises a closed solvent loop.

Another object of the invention is a process for the recycling of vinyl halide polymers suited to process high volumes of vinyl halide polymer comprising materials.

Another object of the invention is a process for the recycling of wire insulation, pipes, flooring, siding, roller shutter, cable and window frames and all other plastic material made of vinyl halide polymer from buildings.

Another object of the present invention is to provide a method of continuously removing the vinyl halide insulation from insulated wire scrap.

Another object of the present invention is to provide a method for the selective recovery of vinyl halide insulation from insulated wire scrap wherein the insulated wire scrap contains numerous other organic insulation materials.

Another object of the present invention is to provide a method for the selective recovery of vinyl halide insulation from building parts wherein the building parts contains numerous other organic insulation materials.

Another object of the present invention is to provide a method of selectively recovering vinyl halide insulation suitable to be reused as electrical insulation from insulated wire scrap containing a combination of vinyl halide, polyolefins, rubber and other organic insulating materials.

Another object of the present invention is to provide a method of selectively recovering vinyl halide polymer suitable to be reused as window frames and the like from worn window frames etc. containing a combination of vinyl halide, polyolefins, rubber and other organic insulating materials.

Another object of the present invention is to provide a method of recovering vinyl halide insulation material from scrap plastic items in fragmented small pieces for recycling into an extrusion coating device or the like for insulating wire and or window frames and the like.

Another object of the present invention is to provide a method of recovering usable metal and usable vinyl halide insulation from scrap insulated wire which does not pollute.

Another object of the invention is a process for the recycling of vinyl halide polymers which is economically less expensive.

Another object of the invention is a process for the recycling of vinyl halide polymers which produces less waste than those of the prior art.

Another object of the invention is a process for the recycling and/or purification of recycled vinyl halide polymer which consumes less energy during solvent removal.

Another object of the invention is a process for the recycling and/or purification of recycled vinyl halide polymer in which less to no hazardous waste originating from PVC additives is produced.

Another object of the invention is an article which comprises at least in part a recycled vinyl halide polymer.

Another object of the invention is a membrane suited for purifying a vinyl halide polymer from additives.

Another object of the invention is a membrane suited for removing additives from vinyl halide polymers.

Another object of the invention is a membrane for treating a liquid phase comprising vinyl halide polymers.

### GENERAL

In the description, range specifications also include the values mentioned as limits. A specification of the type "in the range from X to Y" with respect to a quantity A consequently means that A can assume the values X, Y and values between X and Y. One-sided limited ranges of the kind "up to Y" for a size A mean accordingly as values Y and smaller than Y.

All numeric values and ranges mentioned in this description are meant to be "about" the value or range. The term "about" means that the value or range needs not to be met with absolute accuracy. "About" means that the numerical value or range can be hit exactly, but further includes a range of about +/- 2 %, based on the referenced value or endpoints of ranges. "About" also includes the exact values as a preferred embodiment. For example, a range mentioned to be from 20 to 80 could have its one end between 19.96 and 20.04, with the exact value of 20.00 being preferred Similarly on the other end, it can mean any value between 78.4 and 81.6, with the exact value of 80.0 being preferred. Accordingly, this range could go from 19.96 to 81.6, or from 19.96 to 78.4, and so forth.

### DEFINITIONS

1 Dalton (1 Da) is a unit of mass equal to 1 g/mol, and a 1 kDa equals to 1 kg/mol and 1'000 g/mol. 1 MDa is 1'000'000 Da or 1'000'000 g/mol.

1 Å, or 1 Ångström is a unit of length equal to 0.1 nm, or 10⁻¹⁰ m.

The molecular weight cut-off (MWCO) of a membrane gives the molecular weight of a dissolved polymer, at which 90 % of the amount of the dissolved polymer is retained by the membrane. For commercial membranes, the MWCO is determined by testing polystyrene dissolved in THF when referring to organic solvents, or Dextran dissolved in water for the aqueous systems.

For example, a sample of a polystyrene with a broad and homogeneous molecular weight distribution is dissolved in THF giving a sample solution. The sample solution is subjected to a membrane separation. Both, the sample solution and the permeate which has passed the membrane are characterized using GPC (gel permeation chromatography) with a refractive index detector. This GPC was calibrated with narrow-PDI polystyrene standard model polymers running THF as solvent. The MWCO is determined by identifying the point at which 90% of the dissolved polymer has passed the membrane. Usually, the MWCO is given by the supplier as part of the technical properties of commercial membranes.

The term "has less lead" refers to the presence of lead in elemental form or as an ion. Usually, it is present as an ion of a lead salt or lead containing additive.

### EMBODIMENTS OF THE INVENTION

A contribution to the at least partial achievement of at least one of the aforementioned objectives is provided by the subject-matter of the independent claims. The dependent claims provide preferred embodiments that contribute to the at least partial achievement of at least one of the objectives.
|1| A process of making a poly vinyl halide polymer comprising at least these steps:
   i) Providing:
      [1] a plastic composition,
         wherein the plastic composition comprises at least 10 wt.% of the vinyl halide polymer and one or more additives; and
      [2] a liquid organic phase;
         wherein the liquid organic phase comprises at least an organic solvent;
   ii) Forming a base composition by dissolving the plastic composition in the liquid organic phase at least partially;
   iii) Dividing the base composition into a first composition and a second composition;
      wherein the first composition has a higher content of additives than the second composition; and
      wherein the second composition has a higher content of the vinyl halide polymer than the first composition;
   iv) Splitting the second composition into a raw product and a recovered organic phase;
      wherein at least a part of the splitting in step iv) is made by membrane separation;
   v) Removing further organic phase from the raw product, wherein the solid phase comprising the vinyl halide polymer is obtained;
      wherein at least a part of the removing in step v) is performed by stripping.
   Examples of stripping are vapor stripping, steam stripping and gas stripping. Preference is given to steam stripping. The vapor, steam or gas employed in a stripper are also referred to as "stripping media".
|2| The process of claim 1, wherein the splitting in step iv) is characterized by at least one of these features:
   (I) a membrane having a molecular weight cut-off (MWCO) in the range from 100 Da to 5 kDa;
   (II) the second composition is under a pressure in the range from 2 to 100 bar;
   (III) a temperature in the range from 20 to 120 °C;
   (IV) the membrane is surrounded on its both sides by the liquid organic phase;
   (V) an amount of the recovered organic phase in the range from 5 to 90 Vol.%, the Vol.% based on the total volume of the second composition.
|3| The process of claim 1 or 2, wherein the stripping_in step v) is performed in a stripper employing a stripping media, wherein step v) is characterized by at least one of these features:
   [i] the raw product has a concentration of vinyl halide polymer of at least 5 wt.%;
   [ii] the raw product has a viscosity at a temperature of 79 °C in the range from 0.01 to 10 Pa s;
   [iii] the stripping media is fed to the stripper in the lower section;
   [iv] the stripping media has a temperature in the range from 60 to 140°C;
   [v] the stripping media is steam and recovered water is spread to the inner top of the stripper;
   [vi] the vinyl halide polymer is removed from the bottom of the stripper;
   [vii] the vinyl halide polymer is removed from the bottom of the stripper using a vibrating tube;
   [viii] the vinyl halide can be in suspension in a liquid at the outlet;
   [ix] a pressure in the range from 0.3 to 3 bars in the stripper;
   [x] the stripping media has a pressure in the range from 3 to 18 bars;
   [xi] the stripper comprises at least one insert.
|4| The process of any one of the preceding embodiments, wherein the organic phase in step i) comprises at least 50 wt.% of an organic solvent.
|5| The process of any one of the preceding claims, wherein the at least one organic solvent of the organic phase in step i) is selected from the group consisting of ketones, ethers, aromatics, halogenated solvents, DMA, DMF, DMSO and NADES.
|6| The process of any one of the preceding embodiments, wherein the additives have a molecular weight of 5 kDa or less.
|7| The process of any one of the preceding embodiments, wherein step ii) is characterized by at least one of these features:
   (a) a temperature of both, the plastic composition and the liquid organic phase, in the range from 20 °C to 150 °C;
   (b) step ii) is operated under a pressure in the range from 1 to 50 bars;
   (c) a contacting time of at most 120 minutes;
   (d) agitation of the base composition;
      Or a combination of any two or more of the above.
|8| The process of any one of the preceding embodiments, wherein the dissolving in step ii) is done at a temperature in the range from 20 to 150 °C.
|9| The process of any one of the preceding embodiments, wherein a mixing device is used in step ii).
|10| The process of any one of the preceding embodiments, wherein the dividing in step iii) is performed using a technique selected from one of these: filtration, membrane separation, deep filtration, centrifugation, decantation, rotating decanter, flotation, hydrocycloning.
|11| The process of any one of the preceding claims, wherein the splitting in step iv) is characterized by at least one of these features:
   (I) a membrane having a molecular weight cut-off (MWCO) in the range from 100Da to 5 kDa;
   (II) the second composition is under a pressure in the range from 2 to 100 bar;
   (III) a temperature in the range from 20 to 120 °C
   (IV) the membrane is surrounded on its both sides by the liquid organic phase;
   (V) the recovered organic phase is in the range from 5 to 90 Vol.%, based on the total volume of the second composition.
|12| The process of any one of the preceding claims, wherein the stripping in step v) is characterized by at least one of these features:
   [i] the second composition has a concentration of vinyl halide polymer of at least 10 wt.%;
   [ii] the second composition has a viscosity at a temperature of 79 °C in the range from 0.01 to 10 Pa·s;
   [iii] wherein the stripping media is fed to the stripper in the lower section;
   [iv] wherein the stripping media has a temperature in the range from 60 to 140°C;
   [v] wherein the stripping media is water and recovered water is spread to the inner top of the stripper;
   [vi] wherein the vinyl halide polymer is removed from the bottom of the stripper;
   [vii] wherein the vinyl halide polymer is removed from the bottom of the stripper using a vibrating tube;
   [viii] wherein the condensate from the stripper is adjusted to a pH in the range from 6 to 8;
   [ix] a pressure in the range from 0.3 to 3 bars in the stripper;
   [x] the stripping media has a pressure in the range from 3 to 18 bars;
   [xi] the stripper comprises at least one insert.
|13| The process of any one of the preceding embodiments, wherein the process is operated as a continuous process.
|14| The process of any one of the preceding embodiments, wherein the membrane comprises at least one polymer selected from the group consisting of polyolefin, polysulfone, polyethersulfone, fluoro polymer, polystyrene, polyimide, poly(vinylidene fluoride), cellulose, cellulose nitrate, cellulose acetate, polyacrylonitrile), poly(vinyl alcohol), poly (methacrylic acid), poly (methacrylic acid ester), poly(arylene ether ketone), poly(ether imide), polyaniline nanoparticles, poly(arylene ether sulfone) Polyether ether ketone, fluoro polymer, polypiperazinamide and polyethersulfonamide, and combinations thereof, such as, e.g., copolymers, blends and composites.
|15| The process of any one of the preceding embodiments, wherein the membrane comprises at least one ceramic.
|16| The process of any one of the preceding embodiments, wherein at least a part of the membrane in step iii) is surrounded on its both sides by the liquid organic phase.
|17| The process of any one of the preceding embodiments, wherein the organic phase is at least partially removed from the first composition, from the second composition or from both, whereby a recovered organic phase is obtained.
|18| The process of any one of the preceding embodiments, wherein the recovered organic phase is at least partially reused by providing as liquid organic phase in step i).
|19| The process of embodiment any one of the preceding embodiments, further comprising these steps:
   {a} Providing at least one recovered liquid selected from the first composition, the recovered organic phase and depleted stripping media;
   {b} Removing impurities from the recovered liquid using a separation technique thereby forming a recycled liquid; and
   {c} Providing at least a part of the recycled liquid as liquid organic phase in step i).
|20| The process of any one of the preceding embodiments, wherein the liquid organic phase in step i) comprises an amount of at least 90 wt.% of recovered organic phase.
|21| The process of any one of the preceding embodiments, wherein the vinyl halide polymer is obtained in solid state.
|22| The process of any one of the preceding embodiments, wherein the vinyl halide polymer comprises less than 1 wt.% of organic solvent.
|23| The process of any one of the preceding embodiments, wherein the vinyl halide polymer comprises less than 1'000 ppm of additives, with respect to each additive.
|24| The process of any one of the preceding embodiments, wherein the additives are selected from inorganic and organic compounds.
|25| The process of any one of the preceding embodiments, wherein the organic phase in step i) comprises less than 40 wt.% of water, based on the total amount of organic phase.
|26| The process of any one of the preceding embodiments, wherein vinyl halide polymer has at least 10 -times less additives, per additive substance, than the plastic composition.
|27| The process of any one of the preceding embodiments, wherein vinyl halide polymer has at least 10 -times less lead than the plastic composition.
|28| The process of any one of the preceding embodiments, wherein the vinyl halide polymer comprises less than 0.1 wt.% of lead, based on the total amount of vinyl halide polymer.
|29| The process of any one of the preceding embodiments, wherein vinyl halide polymer has at least 10 times less DEHP than the plastic composition.
|30| The process of any one of the preceding embodiments, wherein the vinyl halide polymer comprises less than 1'000 ppm of DEHP, based on the total amount of vinyl halide polymer.
|31| The process of any one of the preceding embodiments, wherein non-dissolved particles are removed from the base composition prior to step iii).
|32| The process of any one of the preceding embodiments, wherein the vinyl halide polymer obtained in this step has a lower content of additives than the plastic composition in step i).
|33| A vinyl halide polymer obtainable by a process according to any of the preceding embodiments |1| to |31|.
|34| The vinyl halide polymer according to embodiment 1331 comprising less than 1'000 ppm of additives, with respect to each additive.
|35| The vinyl halide polymer according to embodiment 1331 comprising 0.001 wt.% to 0.5 wt.% of organic solvent, the wt.% based on the total weight of the vinyl halide polymer.
|36| An article comprising a vinyl halide polymer obtainable by the process according to any one of embodiments |1| to |35|.
|37| The article according to embodiment |36|, wherein the article is selected from the group consisting of a fiber, a filament, a textile, a film and a formed body, such as pipe, tube or profile, or an object of more complex geometrical shape.
|38| A use of a combined, two-step membrane separation and stripping process to remove volatile organic solvents from a vinyl halide polymer during recovery.
|39| The use of embodiment 1381, wherein the two-step process has improved energy efficiency.
|40| Use of a membrane- stripper combination for improving the purity of at least one vinyl halide polymer.

### DETAILED DESCRIPTION OF THE INVENTION

A first aspect of the invention is a process of making a poly vinyl halide polymer comprising at least these steps:
i) Providing
   [1] a plastic composition,
      wherein the plastic composition comprises at least 10 wt.% of the vinyl halide polymer and one or more additives; and
   [2] a liquid organic phase
      wherein the liquid organic phase comprises at least an organic solvent;
ii) Forming a base composition by dissolving the plastic composition in the liquid organic phase at least partially;
iii)Dividing the base composition into a first composition and a second composition;
   wherein the first composition has a higher content of additives than the second composition; and
   wherein the second composition has a higher content of the vinyl halide polymer than the first composition;
iv) Splitting the second composition into a raw product and a recovered organic phase;
   wherein at least a part of the splitting in step iv) is made by membrane separation;
v) Removing further organic phase from the raw product, wherein the solid phase comprising the vinyl halide polymer is obtained;
   wherein at least a part of the removing in step v) is performed by stripping, for example steam stripping, vapor stripping or gas stripping, preferably steam stripping.

The plastic composition can be of any kind known to a skilled person and considered potentially useful for providing in the present process. The plastic composition is often composed of materials and items which were disposed as waste before. So, the present process could be seen as a recycling of vinyl halide polymers and items comprising one or more vinyl halide polymers. The plastic composition is usually composed of solid components. Prior use of these items can be packaging of food, beverages, non-food, liquids, solids and all kinds of other tradable goods. Also, these items can be packaging of construction materials and even construction materials itself, like windows and doors with plastic frames, pipe, flooring, rigid films, profile, sidings, ceilings, medical and food film, medical articles, tubes, bottles, fittings, shoe soles, cables, and so on.

More specifically, the plastic composition comprises at least 10 wt.% of vinyl halide polymer, i.e. of one, or a combination of two or more vinyl halide polymers. Accordingly, when the term "vinyl halide polymer" used throughout this description refers to a single vinyl halide polymer, as well as to a combination of two or more vinyl halide polymers. This simplification is made to enhance the legibility of the present text.

For example, the plastic composition comprises vinyl halide polymer at least 15, 20, 25, 30, 35, 40, 45, 50, 55, 60, 65, 70, 75, 80, 85 or 90 wt.%, the wt.% with respect to the total plastic composition. For example, the plastic composition may comprises vinyl halide polymer in a range from 15 to 99, 20 to 99, 25 to 99, 30 to 99, 35 to 99, 40 to 99, 45 to 99, 50 to 99, 55 to 99, 60 to 99, 65 to 99, 70 to 99, 75 to 99, 80 to 99, 85 to 99, or 90 to 99, or in a range from 15 to 95, 20 to 95, 25 to 95, 30 to 95, 35 to 95, 40 to 95, 45 to 95, 50 to 95, 55 to 95, 60 to 95, 65 to 95, 70 to 95, 75 to 95, 80 to 95, 85 to 95, or 90 to 95, or in a range from 15 to 90, 20 to 90, 25 to 90, 30 to 90, 35 to 90, 40 to 90, 45 to 90, 50 to 90, 55 to 90, 60 to 90, 65 to 90, 70 to 90, 75 to 90, 80 to 90 or 85 to 90 wt.%, the values and ranges all given as wt.%, the wt.% with respect to the total plastic composition. The remainder in the plastic composition to 100 wt.% is composed of further constituents.

The vinyl halide polymer can be of any kind known to and considered suited to be employed in the present invention. The vinyl halide polymers include the homopolymers and copolymers of vinyl halides including, for example, vinyl chloride and vinyl bromide. The term vinyl halide polymers comprise also copolymers of different vinyl halides with each other or copolymers of a vinyl halide with one or more polymerizable olefinic monomers having at least one terminal CH₂=C< group.

As examples of such olefinic monomers, there may be mentioned the alpha, beta-olefinically unsaturated carboxylic acids such as acrylic acid, methacrylic acid, ethacrylic acid, alpha-cyanoacrylic acid, etc.; esters of acrylic acid such as methyl acrylate, ethyl acrylate, butyl acrylate, octyl acrylate, cyanoethyl acrylate, etc.; esters of methacrylic acid such as methyl methacrylate, butyl methacrylate, etc.; nitrile such as acrylonitrile, methacrylonitrile, etc.; acrylamides such as methylacryl-amide, N-methylol acrylamide, N-butoxy methylacrylamide, etc.; vinyl ethers such as ethyl vinyl ether, chloroethyl vinyl ether, etc.; the vinyl ketones; styrene and styrene derivatives such as methyl styrene, vinyl toluene, chlorostyrene, etc.; vinyl naphthalene; esters such as allyl or vinyl chloroacetate, vinyl acetate, etc.; vinyl pyridene; methyl vinyl ketone; the diolefins, including butadiene, isoprene, chloroprene, etc.; and other polymerizable olefinic monomers of the types known to those skilled in the art.

Accordingly, there may be mentioned as well-suited vinyl halide polymers polyvinylchloride (PVC), PVC-copolymers such as PVC-co-vinyl acetate polymer, chlorinated PVC, polyvinylidene-co-PVC-polymer, impact modified PVC, and more complex copolymers like PVC/PCTFE-PVDC (sold as Aclar by Honeywell or Kel-F by 3M, Inc.).

The vinyl halide polymers particularly useful in the present invention are homopolymers and copolymers made by the polymerization of vinyl chloride alone or in admixture with one or more polymerizable olefinic monomers copolymerizable therewith. The most preferred vinyl polymer, or resin, is polyvinylchloride (PVC) homopolymer produced by mass polymerization or suspension polymerization. However, it is well understood that the invention may be applied to others of the above-described polymers, and is not limited in any way.

In an embodiment of the process according to the first aspect of the invention, the plastic composition comprises at least 10 wt.%, for example at least 15, 20, 25, 30, 35, 40, 45, 50, 55, 60, 65, 70, 75, 80, 85 or at least 90 wt. %, the wt.% with respect to the total plastic composition, of PVC and/or a PVC-copolymer.

In an embodiment of the process according to the first aspect of the invention, the plastic composition comprises polymer in a range from 15 to 99, 20 to 99, 25 to 99, 30 to 99, 35 to 99, 40 to 99, 45 to 99, 50 to 99, 55 to 99, 60 to 99, 65 to 99, 70 to 99, 75 to 99, 80 to 99, 85 to 99, or 90 to 99 wt.%, or in a range from 15 to 95, 20 to 95, 25 to 95, 30 to 95, 35 to 95, 40 to 95, 45 to 95, 50 to 95, 55 to 95, 60 to 95, 65 to 95, 70 to 95, 75 to 95, 80 to 95, 85 to 95, or 90 to 95 wt.%, or in a range from 15 to 90, 20 to 90, 25 to 90, 30 to 90, 35 to 90, 40 to 90, 45 to 90, 50 to 90, 55 to 90, 60 to 90, 65 to 90, 70 to 90, 75 to 90, 80 to 90 or 85 to 90 wt.%, the wt.% with respect to the total plastic composition, of PVC and/or a PVC-copolymer.

This is an embodiment of the first aspect of the invention. It may be combined with any single other embodiment or plurality of embodiments of the first aspect of the invention.

A vinyl halide polymer useful in the process of the invention may have a number-averaged molecular weight of at least 5 kDa. For example, the vinyl halide polymer has a molecular weight of at least 7 kDa, or at least 10 kDa, or at least 15 kDa, or at least 20 kDa, or at least 25 kDa, or at least 50 kDa. For example, the vinyl halide polymer has a molecular weight in the range of 5 kDa to 200 kDa, or from 5 kDa to 120 kDa, or from 10 kDa to 100 kDa, or from 10 kDa to 80 kDa.

The molecular weight of the vinyl halide polymer in this context is the so-called number-averaged molecular weight, also identified as *M̅ₙ̅* or simply Mₙ. The values of *M̅ₙ̅* mentioned here are determined with GPC according to and under observation of the further conditions detailed in the section "test methods". It is common knowledge that the molecular weight information given here is relative to the calibration standard and test conditions employed. Other analytical methods and/or deviation from the testing protocol given in the test method are likely to result in other values for molecular weight. Further it is known that this GPC usually has a cut-off around 500 Da. Constituents of less than this molecular weight cannot be analyzed.

This is an embodiment of the first aspect of the invention. It may be combined with any single other embodiment or plurality of embodiments of the first aspect of the invention.

Further constituents of the plastic composition polymers different from vinyl halide polymers, additives, contamination or dirt, or a combination of two or more thereof.

The further constituents to the base composition, the so-called additives have a molecular weight of less than 5 kDa. For example, the further constituents have a molecular weight of less than 4kDa, less than 3kDa, less than 2kDa or less than 1kDa. Very often, the further constituents have a molecular weight of at least 80 Da. The molecular weight of the further constituents can be calculated based on the molecular weight of the composing atoms.

The number of additives and contaminants is illimited, and any one or more of these can be present. The additives can be categorized by structural features as well as by function. In a closer sense, the term "additives" is applied in the present context to these components, which were used as additives in and with the vinyl halide polymer, which is provided as part of the plastic composition in step i) of the process. Compounds used with and in other polymers, which may be present in the plastic composition, which compounds could be considered "additives" to those polymers, are not named "additives" in the present context. However, also these compounds could be sorted out using the present process.

For example, additives of vinyl halide polymers present in the plastic composition can be antioxidants like UV stabilizers and flame retardants; rheological modifiers like softeners and plasticizers for the manufacturing of items or for the vinyl halide polymer after manufacture, e.g. during use; antioxidants; antistatic agents; heat stabilizers; lubricants and slipping agents; fillers; colorants, pigments and dyes; impact modifier like e.g. polyacrylate core shell impact modifiers and chlorinated polyethylene impact modifier; processing aids, e.g. chlorinated paraffine polyacrylates; blowing agents; antifog agents and biocides.

This is an embodiment of the first aspect of the invention. It may be combined with any single other embodiment or plurality of embodiments of the first aspect of the invention.

Based on structural features, additives can be organic, inorganic or hybrid; hybrid means having features of both organic and inorganic.

A group of more focused inorganic additives are lead compounds, i.e. salts and/or complexes comprising lead (Pb). Some of these are heat stabilizers and/or flame retardants. Examples of inorganic additives possibly present in vinyl halide polymer containing compositions are salts of Pb, Cd, Ca, Zn, Ba, and Sn, Ti and combinations thereof. These inorganic additives are often used as heat stabilizers, UV stabilizers, and fillers.

The organic additives can serve a wide range of duties, for example, as plasticizers and heat stabilizers.

Examples of organic additives are carboxylates of heavy metals, such stearates of lead, cadmium, calcium, barium and zinc; octoates of calcium, barium and zinc; dialkyltin laurate, - maleate and bis(isooctylthioglycollate); lead phthalate; lead maleate; dialkylphthalates and mixed aliphatic-aromatic phthalates; trialkyl mellitates; dialkyl adipates and sebacates. Two of the most known additives from this group are Di(2-ethylhexyl)-phthalate and normal and dibasic lead stearate, tribasic lead phthalate.

This is an embodiment of the first aspect of the invention. It may be combined with any single other embodiment or plurality of embodiments of the first aspect of the invention.

The liquid organic phase can be of any kind known to and considered possibly useful by a skilled person to dissolve the plastic composition. The liquid organic phase comprises at least one, optionally a combination of two or more constituents. Main constituents of the liquid organic phase are organic solvents. The organic solvents forming the combination are miscible in each other, by preference. The liquid organic phase may contain further constituents, different from aforementioned organic solvents.

The liquid organic phase comprises at least one solvent selected from a group of solvent types consisting of ketones, ethers, aromatics, halogenated solvents, dimethylformamide (DMF) and Dimethyl sulfoxide (DMSO), or a combination of two or more solvents, either from the same or different solvent types. Examples of preferred solvent types are ketones and ethers.

Solvents of the solvent types ketones, ethers and halogenated solvents can be either aliphatic or aromatic. The aliphatic ones can be acyclic or cyclic. Possibly, the solvent may comprise more than a single carbon cycle. Moreover, a cyclic solvent may have one or more heteroatoms in its cycle, i.e. an atom or atoms which are structural part of the cycle but not carbon (-C-).

Some examples of acyclic ketones are ethyl methyl ketone, diethyl ketone, methyl isobutyl ketone, methyl isoamyl ketone and di-(isobutyl) ketone.

Some examples of cyclic ketones are cyclopentanone, cyclohexanone, cycloheptanone and isophorone.

Some examples of cyclic ethers are tetrahydrofuran, 2-methyl tetrahydrofurane and 1,4 dioxane.

Some examples of aromatics are Toluene and xylene.

Chlorinated solvents are usually another choice when thinking of halogenated solvents. Some examples of halogenated solvents are dichloromethane, methylene chloride, 1,1-dichloreoethylene, Ethylene dichloride, chloroform, 1,1-dichloroethane, trichloroethylene, carbon tetrachloride, chlorobenzene, o-dichlorobenzene.

In another embodiment, an amount of a co-solvent can be added to the liquid organic phase. For example, the co-solvent is an organic or inorganic solvent in which vinyl halide polymers such as PVC are not fully soluble, or even insoluble. Examples of co-solvents are alcohols, alkanes & water. The alcohols can be aliphatic, and further monovalent or polyvalent, such as di- or trivalent. They can also be acyclic and cyclic, linear or branched. Examples of monovalent alcohols: C1 - C20, or C1 - C10, such as methanol, ethanol, propanol, butanol, pentanol, hexanol, heptanol, octanol, decanol, dodecanol, iso- and neo-alcohols thereof; examples of divalent alcohols:C2- C10, or C2 - C6, such as Ethan-1,2-diol, Propan-1,2-diol, Propan-1,3-diol, Butan-1,2-diol, Butan-1,3-diol, Butan-1,4-diol, Bu-tan-2,3-diol, Pentan-1,5-diol, Hexan-1,6-diol, Octan-1,8-diol, Nonan-1,9-diol and Decan-1,10-diol; an example of a trivalent, acyclic and alcohol linear is glycerol; a trivalent, acyclic and branched alcohol is trimethylol propane (TMP). Examples of cyclic monovalent alcohols are cyclopentanol and cyclohexanol.

Examples of alkanes are C5 - C40, or C6 - C20, or C6 - C12, such as pentane, hexane, heptane, octane, nonane, decane, undecane, dodecane, tridecane, tetradecane, pentadecane, hexadecane, heptadecane, octadecane, nonade-cane, icosane, triacontane and tetracontane. The alkanes are preferably linear, branched or contain or form one or more cycles, i.e. be cyclic.

This is an embodiment of the first aspect of the invention. It may be combined with any single other embodiment or plurality of embodiments of the first aspect of the invention.

In an embodiment of the first aspect of the process of the invention, the liquid organic phase comprises at least 50 wt.% of methyl ether ketone (MEK).

This is an embodiment of the first aspect of the invention. It may be combined with any single other embodiment or plurality of embodiments of the first aspect of the invention.

Turning to the process of the invention, step i) is providing both, the plastic composition and the liquid organic phase. Providing may be accomplished by any means and techniques known to and considered suited in the present process by a skilled person. For example, providing may be placing both, the plastic composition and the liquid organic phase, in a vessel, like a beaker, a pot, a round bottom flask, a mixer and the like. In principle, both components, i.e. the plastic composition and the liquid organic phase can be placed at the same time or one after another, or the first at once, and the second component in multiple portions.

The providing may be made by any means and techniques known to and considered suited in the present process by a skilled person. For example, providing of [1] may be a placing a plastic composition in a vessel, like a beaker, a pot, a round bottom flask, a mixer, a feeder, a tank and the like. Providing of [2] can be an addition of liquid organic phase in a vessel. In another setting, liquid organic phase is fed into a vessel, e.g. by pouring or through a pipe, and [1] is added from top, e.g. by direct pouring or through a sluice.

In an embodiment of the process of the invention, the providing of plastic composition comprises a reducing in size, e.g, a grinding, of larger pieces of the plastic composition into particles, i.e. reducing the size of larger items of plastic composition into to smaller items of plastic composition. The plastic composition's origin can be, amongst others, post-consumer and post-industrial waste as already mentioned but also originate from buildings and other construction, automotive, transportation or industrial uses, as well as cut-offs from production of items related thereto. The plastic composition can comprise large items or parts of items. Then, the plastic compositions' item size can be disadvantageous to run the process of the invention. In another embodiment of the process of the invention, the providing in step i) comprises a grinding of the plastic composition, wherein at least 75 % of the resulting particles have a size of 5 cm or less, based on the total number of the particles ground.

This is an embodiment of the first aspect of the invention. It may be combined with any single other embodiment or plurality of embodiments of the first aspect of the invention.

Preferably, at least 80, 90, 95 or 97 % of the resulting particles of the plastic composition have a size of about 5 cm or less. Often, they have a size of at least 0.2 cm, or at least 0.5 cm. Preferably, at least 80, 90, 95 or 97 % of the resulting particles have a size of about 4 cm or less. Often, they have a size of at least 0.2 cm, or at least 0.5 cm. Preferably, at least 80, 90, 95 or 97 % of the resulting particles have a size of about 3 cm or less. Often, they have a size of at least 0.2 cm, or at least 0.5 cm. Preferably, at least 80, 90, 95 or 97 % of the resulting particles have a size of about 2 cm or less. Often, they have a size of at least 0.2 cm, or at least 0.5 cm. Preferably, at least 80, 90, 95 or 97 % of the resulting particles of plastic composition have a size of about 1 cm or less. Often, the pareticles have a size of at least 0.2 cm, or at least 0.5 cm.

This is an embodiment of the first aspect of the invention. It may be combined with any single other embodiment or plurality of embodiments of the first aspect of the invention.

In another embodiment of the process of the invention, the grinding is made using at least one of the techniques selected from universal milling, roller milling, cut milling, single shaft shredder, pulverizer and crusher machine.

This is an embodiment of the first aspect of the invention. It may be combined with any single other embodiment or plurality of embodiments of the first aspect of the invention.

In step ii) a base composition is formed by dissolving the plastic composition in the liquid organic phase at least partially.

Agitation can be used to speed up and/or assist the dissolving in step ii). Agitation may be made by all means and techniques known to and considered suited in the present process by a skilled person. For example, a mechanical stirrer can be used in order to stir the plastic composition and the liquid organic phase during step ii). Another way to accomplish agitation may be applying a stream of gas. For example, air could be bubbled from the bottom of a vessel used in step ii) and through the mix of liquid organic phase and plastic composition. Or a jet of air could be pressed through a nozzle in the vessel's wall.

This is an embodiment of the first aspect of the invention. It may be combined with any single other embodiment or plurality of embodiments of the first aspect of the invention.

In another embodiment, the plastic composition is ground prior to or during dissolution to speed up and/or assist the dissolving in step ii).

This is an embodiment of the first aspect of the invention. It may be combined with any single other embodiment or plurality of embodiments of the first aspect of the invention.

In another embodiment, the plastic composition is ground prior to or during dissolution and agitated during the dissolving in step ii) to speed up and/or assist the dissolving in step ii).

This is an embodiment of the first aspect of the invention. It may be combined with any single other embodiment or plurality of embodiments of the first aspect of the invention.

The base composition obtained from step ii) can be homogenous and purely liquid, or heterogenous, i.e. a liquid with some undissolved yet solid remainder. Ideally, all of the vinyl halide polymer originally present in the plastic composition has dissolved into the liquid organic phase at this stage. In case of being heterogeneous, it might be advantageous to remove the solid remainder from the base composition to obtain a homogenous base composition. Removal of the solid remainder can be accomplished by any means and techniques known to and considered suited in the present process by a skilled person. For example, by passing the base composition through a filter or a sieve. One might also remove the solid remainder by decantation provided that the solid remainder swims on the surface or sinks to the bottom of the base composition, i.e. the density of the solid remainder is less or larger than the density of the base composition.

The base composition comprises at least these constituents:
[1] An amount of the plastic composition, and
[2] An amount of the liquid organic phase.

Both constituents were provided in step i). As discussed above, at least a part of constituent [1] is dissolved in constituent [2].

In a preferred embodiment of the first aspect of the invention, the base composition comprises at least 5 wt.%, for example 5 to 50 wt.%, or 5 to 40 wt.%, or 5 to 30 wt.%, 5 to 20 wt.%, 5 to 15 wt.% or 5 to 13 wt.%, or 5 to 10 wt.% of plastic composition, the wt.% based on the total base composition.

This is an embodiment of the first aspect of the invention. It may be combined with any single other embodiment or plurality of embodiments of the first aspect of the invention.

In a preferred embodiment of the first aspect of the invention, the base composition comprises at least 50 wt.%, for example 50 to 95 wt.%, or 60 to 95 wt.%, or 70 to 95 wt.%, or 80 to 95 wt.%, or 85 to 95 wt.%, or 87 to 95 wt.%, or 90 to 95 wt.% of liquid organic phase, the wt.% based on the total base composition. Usually, the amount of organic solvent is about the same as the amount of liquid organic phase.

This is an embodiment of the first aspect of the invention. It may be combined with any single other embodiment or plurality of embodiments of the first aspect of the invention.

In yet another preferred embodiment of the first aspect of the invention, the base composition comprises in a range from 5 to 50 wt.% plastic composition and in a range from 50 to 95 wt.% liquid organic phase, the wt.% based on the total base composition.

In yet another preferred embodiment of the first aspect of the invention, the base composition comprises in a range from 5 to 15 wt.% plastic composition and in a range from 85 to 95 wt.% liquid organic phase, the wt.% based on the total base composition. Preferably, the base composition comprises 5 to 13 wt.% of plastic composition and 87 to 95 wt.% of liquid organic phase, based on the total base composition.

This is an embodiment of the first aspect of the invention. It may be combined with any single other embodiment or plurality of embodiments of the first aspect of the invention.

The base composition may comprise further constituents. These further constituents may have been provided either in step i), or during or after having formed the base composition in step ii).

The base composition is then divided into a first composition and a second composition. It is an aim to concentrate the vinyl halide polymer in one of the second composition, and the further constituents in the first composition. For the purpose of the presentation of the invention, the composition which has the higher vinyl halide polymer content is described as the "second composition", and the composition having a lower content of vinyl halide polymer is the "first composition". The terms "lower" and "higher" in this context refer to the relative content of vinyl halide polymer when comparing the first and the second composition. For example, 60 wt.% of vinyl halide polymer in a sample is a higher content that 40 wt.% of vinyl halide polymer.

In a preferred variant of the invention, step ii) is performed at a temperature in the range from 20 °C to 150 °C, for example at a temperature in the range from 35 to 55°C, from 60 to 90 °C, or from 100 to 120 °C. The temperature depends on the constituents of the liquid organic phase. The temperature may be chosen not to exceed the boiling point bpₘᵢₙ of the constituent in the liquid organic phase, which is lowest, amongst all the constituents composing the liquid organic phase. It is preferred to choose the temperature for step ii) in the range from 60 to 90 %, or from 70 to 95%, the % in all cases relative to bpₘᵢₙ. For example, if the liquid organic phase is composed of ethyl methyl ketone (MEK) being the constituent of the liquid organic phase having the lowest boiling point, then bpₘᵢₙ is the boiling point of MEK, which is 79,6 °C. Then, step ii) is preferably performed at a temperature in the range from 0,6*bpₘᵢₙ to 0,9*bpₘᵢₙ, which is in the range from 47,8 and 71,6 °C.

This is an embodiment of the first aspect of the invention. It may be combined with any single other embodiment or plurality of embodiments of the first aspect of the invention.

Another, preferred variant of the invention is to perform step ii) at a temperature above the boiling point of the liquid organic phase, and in case of a solvent mixture above the boiling point bpₘᵢₙ of the constituent to the liquid organic phase which has the lowest boiling point amongst all constituents composing the liquid phase. For example, the temperature in step ii), and optionally step iii) could be up to 50 °C higher than the boiling point, or up to 40, 30, 20, or 10 to 50, 15 to 50, 20 to 50, or 20 to 45, 20 to 40 °C higher than the boiling point.

This is an embodiment of the first aspect of the invention. It may be combined with any single other embodiment or plurality of embodiments of the first aspect of the invention.

In that event, step ii), and optionally step iii) may be operated under pressure. For example, between 1 and 50 bars above ambient pressure, or 1 to 40, 1 to 35, 1 to 30, 1 to 25, 1 to 20, or 5 to 40, 5 to 35, 5 to 30, 5 to 25, or 10 to 40, 10 to 35, or 15 to 40, 15 to 35, or 20 to 50, 20 to 45, 20 to 40 bars above ambient pressure.

This is an embodiment of the first aspect of the invention. It may be combined with any single other embodiment or plurality of embodiments of the first aspect of the invention.

According to the invention, the dividing in step iii) is dividing of the base composition into a first composition and a second composition; wherein the first composition has a higher content of additives than the second composition; and wherein the second composition has a higher content of the vinyl halide polymer than the first composition.

In this step, the base composition is divided into a first composition and a second composition, wherein the first composition has a higher content of additives than the second composition; and wherein the second composition has a higher content of the vinyl halide polymer than the first composition; In other words, this can be seen as a purification step, in which some components found in the base composition are removed from the liquid organic phase containing the vinyl halide polymer.

In an embodiment of the process of the invention, the dividing in step iii) is made using a technique selected from one of these: filtration, membrane separation, deep filtration, centrifugation, decantation, rotating decanter, flotation, cycloning.

This is an embodiment of the first aspect of the invention. It may be combined with any single other embodiment or plurality of embodiments of the first aspect of the invention.

A membrane in the present context is a selective barrier. That is, it allows some constituents to pass through but stops others. Such constituents of the base composition may be molecules, ions, or other small particles.

A membrane can be used as a selective barrier for a polymer, here vinyl halide polymer, in a liquid organic phase. The vinyl halide polymer can be retained at least partially in at least a part of the liquid organic phase while other constituents of the liquid organic phase and another part of the liquid phase may pass through the membrane. In other words, this membrane separates polymers from low-molecular weight additives, for example those described below. The part of the liquid organic phase which is retained by the membrane is described as the "second composition" for the purpose of the present invention. This is also referred to as "concentration step", from the view of retaining the vinyl halide polymer.

Another selective barrier is a filter. A filter is a device including a porous layer. It is designed to separate solid constituents from a liquid which are present in the liquid. The solids are retained by the filter while the liquid passes through. Typical solids present in the liquid are impurities like particles, fibres etc. Usually, the solids swim on, be sunken and/or suspended in the liquid. A common way to prepare a filter in chemistry is to provide a funnel or so, and to put a sheet of paper in it. Another variant comprises a porous plate or a glass frit.

A membrane and a filter are not the same. Typically, membranes are used to separate components which are dissolved in a liquid or a gas mixture, while filters are used to separate solid matter present in a liquid. Preferably, no solid parts are involved in a feed solution of a membrane separation, because a membrane would be blocked by solid parts. Accordingly, a composition must be filtered prior to a membrane separation, in case a base composition or the second composition comprises solid parts.

This is an embodiment of the first aspect of the invention. It may be combined with any single other embodiment or plurality of embodiments of the first aspect of the invention.

The process of the invention further comprises step iv), which is splitting the second composition into a raw product and a recovered organic phase; wherein at least a part, preferably all of the splitting in step iv) is made by membrane separation, i.e., by using a membrane. Usually, the raw product has a lower content of organic phase than the second composition.

The aim of this step is to concentrate the vinyl halide polymer in the second composition, which is thus named from now on to contain the "raw product".

A characteristic feature of a membrane to retain polymers is the so-called molecular weight cut-off (MWCO). The MWCO value is, at which 90 %, by weight, of certain oligomers or polymers having the indicated *M̅ₙ̅* or above are retained by the membrane. The MWCO value of a polymer can vary depending on the solvent employed for dissolving the polymer, and temperature and external pressure applied to the solution. Accordingly, the MWCO is determined with regard to a reference polymer dissolved in a reference solvent and under further standardized conditions.

These membranes are useful to retain solute polymer in one part of solvent, in which the concentration of the polymer increases. As mentioned before, the MWCO is usually indicated with regard to a model polymer-solvent system, such as polystyrene in THF. Accordingly, a membrane with MWCO of 500 does not necessarily separate molecules of above and below molecular weight for another polymer and even for polystyrene, when in another solvent than in the model system. So, it has always to be determined to what a specific membrane is suited, and there may be a need to either modify on the solvent side or the membrane side to achieve satisfactory separation results.

The splitting in step iv) can be achieved by a single splitting step, or by a sequence of multiple splitting steps. That is, when another splitting follows to a first splitting, and so on. In this event, it is preferred to combine all portions of vinyl halide polymer obtained in these splitting steps on the one side, and all organic phase portions to a combined recovered organic phase. The splitting in step iv) might be considered satisfactory, when a maximum of 5 to 50 wt.%, for example 5 to 40 wt.% or 5 to 30 wt.% of liquid organic phase remains with the vinyl halide polymer.

In the present invention, the membrane is used as a selective barrier for a polymer, here a vinyl halide polymer, which is dissolved in a liquid organic phase. The vinyl halide polymer is retained at least partially in at least a part of the liquid organic phase while another part of the liquid phase is supposed to pass through the membrane. In other words, this membrane concentrates a polymer by removal of parts of the liquid organic phase. The part of the liquid organic phase which is retained by the membrane is described as the "raw" for the purpose of the present invention. This is also referred to as "concentration step", from the view of retaining the vinyl halide polymer.

The splitting in step iv) can be achieved by a single membrane separation step, or by a sequence of multiple membrane separation steps. That is, when another splitting of the second composition with a further membrane into a sub-second and a sub-first composition and so on is made. In this event, it is preferred to combine all second compositions in the end to form a "final" second composition, and to combine all first compositions in the end to form a "final" first composition. Accordingly, the second composition has concentrated the vinyl halide polymer while the first composition has concentrated the further constituents.

This is an embodiment of the first aspect of the invention. It may be combined with any single other embodiment or plurality of embodiments of the first aspect of the invention.

In an embodiment of the process of the first aspect of the invention, the splitting in step iv) is characterized by at least one of these features:
(I) a membrane having a molecular weight cut-off (MWCO) in the range from 100 to 5 kDa;
(II) the second composition is under a pressure in the range from 2 to 100 bar;
(III) a temperature in the range from 20 to 120 °C;
(IV) the membrane is surrounded on its both sides by the liquid organic phase;
(V) the recovered organic phase is in the range from 5 to 90 Vol.%, the Vol.% based on the total volume of the second composition.

Moreover, or a combination of any two or more of the above features can apply. Preferred embodiments of with combinations of the above features are: (I), (II), (I)+(II), (III), (I)+(III), (II)+(III), (I)+(II)+(III), (IV), (I)+(IV), (II)+(IV), (I)+(II)+(IV), (III)+(IV), (I)+(III)+(IV), (II)+(III)+(IV), (I)+(II)+(III)+(IV), (V), (I)+(V), (II)+(V), (I)+(II)+(V), (III)+(V), (I)+(III)+(V), (II)+(III)+(V), (I)+(II)+(III)+(V), (IV)+(V), (I)+(IV)+(V), (II)+(IV)+(V), (I)+(II)+(IV)+(V), (III)+(IV)+(V), (I)+(III)+(IV)+(V), (II)+(III)+(IV)+(V), (I)+(II)+(III)+(IV)+(V), (VI), (I)+(VI), (II)+(VI), (I)+(II)+(VI), (III)+(VI), (I)+(III)+(VI), (II)+(III)+(VI), (I)+(II)+(III)+(VI), (IV)+(VI), (I)+(IV)+(VI), (II)+(IV)+(VI), (I)+(II)+(IV)+(VI), (III)+(IV)+(VI), (I)+(III)+(IV)+(VI), (II)+(III)+(IV)+(VI), (I)+(II)+(III)+(IV)+(VI), (V)+(VI), (I)+(V)+(VI), (II)+(V)+(VI), (I)+(II)+(V)+(VI), (III)+(V)+(VI), (I)+(III)+(V)+(VI), (II)+(III)+(V)+(VI), (I)+(II)+(III)+(V)+(VI), (IV)+(V)+(VI), (I)+(IV)+(V)+(VI), (II)+(IV)+(V)+(VI), (I)+(II)+(IV)+(V)+(VI), (III)+(IV)+(V)+(VI), (I)+(III)+(IV)+(V)+(VI), (II)+(III)+(IV)+(V)+(VI), and (I)+(II)+(III)+(IV)+(V)+(VI).

This is an embodiment of the first aspect of the invention. It may be combined with any single other embodiment or plurality of embodiments of the first aspect of the invention.

In a preferred embodiment of the present invention, the MWCO of the membrane is 5 kDa or less, for example 3 kDa or less or 1.5 kDa or less. For example, the MWCO of the membrane is in the range from 100 to 5 kDa, or from 100 to 3 kDa, 100 to 1.5 kDa, or from 100 to 1.2 kDa, from 200 to 3 kDa, or from 200 to 1000 Da, or from 400 to 5 kDa, from 400 to 3 kDa, from 400 to 1.2 kDa, or from 400 to 1000 Da.

This is an embodiment of the first aspect of the invention. It may be combined with any single other embodiment or plurality of embodiments of the first aspect of the invention.

In an embodiment of the present invention, the second composition is during the splitting under a pressure of 2 bar or more, for example 5 bar or more, 10 bar or more, 15 bar or more, 20 bar or more, 30 bar or more, 40 bar or more, 50 bar or more, 60 bar or more, or 70 bar or more, wherein the pressure in each case is given as gauge pressure.

This is an embodiment of the first aspect of the invention. It may be combined with any single other embodiment or plurality of embodiments of the first aspect of the invention.

In a preferred embodiment of the present invention, the second composition is during the splitting under a pressure of up to 100 bar at most, for example up to 80 bar at most, or 75 bar at most, 70 bar at most, 60 bar at most, 50 bar at most, 40 bar at most, or up to 30 bar at most, wherein the pressure in each case is given as gauge pressure.

This is an embodiment of the first aspect of the invention. It may be combined with any single other embodiment or plurality of embodiments of the first aspect of the invention.

In an embodiment of the present invention, the second composition is during the splitting under a pressure in the range from 2 to 80 bar. For example, the pressure could be from 2 to 100 bar, from 2 to 80 bar, or from 2 to 70 bar, from 2 to 60 bar, from 2 to 20 bar, from 2 to 40 bar, from 2 to 30 bar, from 2 to 20 bar; for example, the pressure could be from 5 to 100 bar, or from 5 to 80 bar, from 5 to 70 bar, from 5 to 60 bar, from 5 to 50 bar, from 5 to 40 bar, from 5 to 30 bar, from 5 to 20 bar; for example, the pressure could be from 10 to 100 bar, or from 10 to 80 bar, from 10 to 70 bar, from 10 to 60 bar, from 10 to 50 bar, from 10 to 40 bar, from 10 to 30 bar; for example, the pressure could be from 20 to 100 bar, or 20 to 80 bar, from 20 to 70 bar, from 20 to 60 bar, from 20 to 50 bar, or from 20 to 40 bar; for example, the pressure could be from 20 to 100 bar, or from 20 to 80 bar, from 30 to 80 bar, from 40 to 80 bar, from 50 to 80 bar, from 60 to 80 bar, or from 70 to 80 bar; or from 30 to 70 bar, from 30 to 60 bar, from 30 to 50 bar, or from 40 to 60 bar, the pressure in each case is given as gauge pressure.

Gauge pressure is defined to be the pressure difference between the pressure applied and atmospheric pressure. For the sake of completeness, the gauge pressure equals to the absolute pressure - 1 bar. Absolute pressure is the pressure above of having no matter inside a space, i.e. a perfect vacuum.

This is an embodiment of the first aspect of the invention. It may be combined with any single other embodiment or plurality of embodiments of the first aspect of the invention.

In an embodiment of the present invention, the splitting in step iv) is performed at a temperature of 20 °C or more, e.g., 25 °C or more, 30 °C or more, 40 °C or more, 50 °C or more, 60 °C or more, 70 °C or more, 80 °C or more, 90 °C or more, 100 °C or more, or 110 °C or more.

This is an embodiment of the first aspect of the invention. It may be combined with any single other embodiment or plurality of embodiments of the first aspect of the invention.

In an embodiment of the present invention, the splitting in step iv) is performed at a temperature of 120 °C or less, e.g., 110 °C or less, 100 °C or less, 90 °C or less, 80 °C or less, 70 °C or less, 60 °C or less, 50 °C or less, 40 °C or less.

This is an embodiment of the first aspect of the invention. It may be combined with any single other embodiment or plurality of embodiments of the first aspect of the invention.

In a further embodiment of the present invention, the splitting in step iv) is performed at a temperature in the range from 20 to 120 °C, e.g., from 25 to 120 °C, from 30 to 120 °C, from 40 to 120 °C, from 50 to 120 °C, from 60 to 120 °C, from 70 to 120 °C, from 80 to 120 °C, from 90 to 120 °C, from 100 to 120 °C, from 110 to 120 °C; or from 20 to 110 °C, from 25 to 110 °C, from 30 to 110 °C, from 40 to 110 °C, from 50 to 110 °C, from 60 to 110 °C, from 70 to 110 °C, from 80 to 110 °C, from 90 to 110 °C, from 100 to 110 °C; or from 20 to 100 °C, from 25 to 100 °C, from 30 to 100 °C, from 40 to 100 °C, from 50 to 100 °C, from 60 to 100 °C, from 70 to 100 °C, from 80 to 100 °C, from 90 to 100 °C; or from 40 to 90 °C, from 50 to °C, from 40 to 80 °C, or from 50 to 80 °C.

This is an embodiment of the first aspect of the invention. It may be combined with any single other embodiment or plurality of embodiments of the first aspect of the invention.

In an embodiment of the present invention, the second composition is characterized in step iv) by an amount of recovered organic phase at least 5 Vol.%, e.g., at least 10 Vol.%, or 20, 30, 40, 50, 60, 70 or at least 80 Vol.%, the Vol.% based on the total volume of the second composition.

This is an embodiment of the first aspect of the invention. It may be combined with any single other embodiment or plurality of embodiments of the first aspect of the invention.

In an embodiment of the present invention, the second composition is characterized in step iv) by an amount of recovered organic phase at most 90 Vol.%, e.g., at most 85 Vol.%, or 80, 70, 60, 50, 40, 30 or at most 20 Vol.%, the Vol.% based on the total volume of the second composition.

This is an embodiment of the first aspect of the invention. It may be combined with any single other embodiment or plurality of embodiments of the first aspect of the invention.

In an embodiment of the present invention, the second composition is characterized in step iv) by an amount of recovered organic phase in the range from 5 to 90 Vol.%, for example from 10 to 90 Vol.%, or from 15 to 90 Vol.%, or from 20 to 90 Vol.%, or from 30 to 90 Vol.%, or from 40 to 90 Vol.%, or from 50 to 90 Vol.%, or from 60 to 90 Vol.%, or from 70 to 90 Vol.%, or from 80 to 90 Vol.%, or from 5 to 85 Vol.%, or from 10 to 85 Vol.%, or from 15 to 85 Vol.%, or from 20 to 85 Vol.%, or from 30 to 85 Vol.%, or from 40 to 85 Vol.%, or from 50 to 85 Vol.%, or from 60 to 85 Vol.%, or from 70 to 85 Vol.%, or 10 from to 80 Vol.%, or 10 from to 70 Vol.%, or 10 from to 60 Vol.%, or 10 from to 50 Vol.%, or 10 from to 40 Vol.%, or 10 from to 30 Vol.%, or 30 from to 80 Vol.%, from 40 to 80 Vol.%, from 50 to 80 Vol.%, or from 30 to 70 Vol.%, or from 40 to 60 Vol.%, the Vol.% based on the total volume of the second composition.

This is an embodiment of the first aspect of the invention. It may be combined with any single other embodiment or plurality of embodiments of the first aspect of the invention.

Further, the process of the present invention may have a throughput in step iv) of at least 0.5 L/m²/h/bar, for example in a range from 0.5 to 100 L/m²/h/bar, or from 0.5 to 70 L/m²/h/bar, or from 0.5 to 50 L/m²/h/bar, or from 1 to 70 L/m²/h/bar, or from 1 to 50 L/m²/h/bar, or from 1 to 40 L/m²/h/bar, or from 1 to 30 L/m²/h/bar, or from 1 to 25 L/m²/h/bar, or from 1 to 20 L/m²/h/bar, or from 1 to 15 L/m²/h/bar, or from 1 to 10 L/m²/h/bar, or from 1 to 7 L/m²/h/bar, or from 1 to 5 L/m²/h/bar, or from 1 to 3 L/m²/h/bar. The throughput through a membrane is also referred to as "membrane flux" or "permeance". Permeate flux describes the quantity of the permeate produced during membrane separation per unit of time and membrane area. The flux is measured in volume per square meters per hour per bar.

This is an embodiment of the first aspect of the invention. It may be combined with any single other embodiment or plurality of embodiments of the first aspect of the invention.

In yet another embodiment of the present invention, the splitting in step iv) is characterized by
(Ia) a membrane having a MWCO in the range from 100 to 1000 Da;
(IIa) the second composition is under a pressure in the range from 10 to 80 bar; and
(IIIa) a temperature in the range from 40 to 120 °C.

This is an embodiment of the first aspect of the invention. It may be combined with any single other embodiment or plurality of embodiments of the first aspect of the invention.

These membranes are useful to retain solute polymer in the liquid organic phase during step iv), wherein the concentration of the polymer increases. At least some of the liquid organic phase passes through the membrane, which gives a recovered organic phase. As mentioned before, the MWCO is usually indicated with regard to a model polymer-solvent system, such as polystyrene in THF. Accordingly, a membrane with MWCO of 500 does not necessarily separate molecules of above and below molecular weight for another polymer and even for polystyrene, when in another solvent than in the model system. So, it has always to be determined to what a specific membrane is suited, and there may be a need to either modify on the solvent side or the membrane side to achieve satisfactory separation results. Nevertheless, this is well known to a skilled person.

Further, the base composition as well as the second composition, each of them may, independently from the other, be under a pressure in the range from 2 to 100 bar to improve speed of step ii), step iii) and/or step iv), or steps ii) & iii), steps iii) and iv), or all the three steps ii) - iv).

This is an embodiment of the first aspect of the invention. It may be combined with any single other embodiment or plurality of embodiments of the first aspect of the invention.

In an embodiment of the aforesaid, the pressure could be from 5 to 40 bar, or from 5 to 35 bar, from 5 to 30 bar, from 5 to 25 bar, from 5 to 20 bar, or from 10 to 35 bar, from 10 to 30 bar, from 10 to 25 bar, from 10 to 20 bar, or from 15 to 35 bar, from 15 to 30 bar, from 15 to 25 bar, from 15 to 20 bar, the pressure in each case given as gauge pressure.

This is an embodiment of the first aspect of the invention. It may be combined with any single other embodiment or plurality of embodiments of the first aspect of the invention.

In another embodiment the aforesaid, the pressure could be from 40 to 100 bar, for example from 40 to 90 bar, from 40 to 80 bar from 40 to 70 bar, from 50 to 100 bar, from 50 to 90 bar, from 50 to 80 bar, from 50 to 70 bar, or from 60 to 100 bar, from 60 to 90 bar or from 60 to 80 bar, or from 70 to 100 bar, or from 70 to 90 bar, the pressure in each case given as gauge pressure. Preferably, step iv), or step iii), or both step iii) and step iv) are operated under such a pressure.

The gauge pressure is defined to be the pressure difference between the pressure applied and atmospheric pressure. For the sake of completeness, the gauge pressure equals to the absolute pressure - 1 bar. Absolute pressure is the pressure above of having no matter inside a space, i.e. a perfect vacuum.

This is an embodiment of the first aspect of the invention. It may be combined with any single other embodiment or plurality of embodiments of the first aspect of the invention.

Another characteristic feature of step iv), in which the second composition is split into a raw product and a recovered organic phase using a membrane, is a so-called pressure drop. Pressure drop is defined as the difference of pressure between both sides of a membrane in proper working conditions. The pressure drop of a membrane used with the invention can be in the range from 1 to 50 bar, 1 to 40 bar, 5 to 40 bar, 10 to 40 bar, 20 to 40 bar or 10 to 30 bar, 10 to 35 bar, 10 to 40 bar. The pressure drop cannot exceed the pressure of the second composition. In an embodiment of the invention, one side of the membrane is under ambient pressure during operation.

The membrane employed in step iv) can be of any kind known to and considered for use in the present invention by a skilled person. For example, the membrane may comprise at least one polymer selected from the group consisting of polyolefine, polysulfone, polyethersulfone, fluoro polymer, polystyrene (PS), polyimide (PI), poly(vinylidene fluoride) (PVDF), cellulose, cellulose nitrate, cellulose acetate, poly(acrylonitrile) (PAN), poly(vinyl alcohol) (PVA), poly (methacrylic acid), poly (methacrylic acid ester), poly(arylene ether ketone), poly(ether imide) (PEI), polyvinyl chloride (PVC); polyaniline nanoparticles, poly(arylene ether sulfone) Polyether ether ketone (PEEK), fluoro polymer, polypiperazinamide and polyethersulfonamide, and combinations thereof, such as, e.g., copolymers, blends and composites. In an embodiment, the membrane can be chemically modified. This may include functionalization of the membrane, in particular its surface, refunctionalization and chemical crosslinking. A chemical modification may improve selectivity, durability and/or lifetime of a membrane.

This is an embodiment of the first aspect of the invention. It may be combined with any single other embodiment or plurality of embodiments of the first aspect of the invention.

In another variant, the membrane may comprise a ceramic. These membranes are more from metal oxides such as alumina, zirconia, titania or mixed oxides. A top layer of a polymer with hydrophobic groups may be grafted on the ceramic membrane to enhance organic solvent flux.

This is an embodiment of the first aspect of the invention. It may be combined with any single other embodiment or plurality of embodiments of the first aspect of the invention.

Further, thin film composite (TFC) membranes may be used. These membranes have an ultrathin separating layer coated onto a support membrane layer and/or a supporting structure. The support membrane provides mechanical stability. Examples of support membrane are polysulfones (PSf), poly(ether sulfone) (PES), polyacrylonitrile (PAN), poly(vinylidene fluoride) (PVDF), polypropylene (PP), polyimide (PI) and polybenzimidazole (PBI), as well as inorganic membranes. The ultrathin separating layer can be formed, e.g., by casting an ultrathin film first and then laminating it to the support; interfacial polymerization at the surface of a support, dip coating a polymer solution onto a support, dip coating a reactive monomer or prepolymer onto a support followed by a curing step, and by plasma deposition from the gas phase of a monomer.

This is an embodiment of the first aspect of the invention. It may be combined with any single other embodiment or plurality of embodiments of the first aspect of the invention.

Further, integrally skinned asymmetric (ISA) membranes can be used. ISA membranes have a skin layer on top of a more porous sublayer of the same composition.

This is an embodiment of the first aspect of the invention. It may be combined with any single other embodiment or plurality of embodiments of the first aspect of the invention.

Preparation and usage of membranes for separation purposes is quite known to a skilled person, see P. Marchetti et al., "Molecular Separation with Organic solvent Nanofiltration: A critical review", in Chemical Reviews, 2014, 114, 10735 - 10806.

Further, the membrane forming polymer may be pre-conditioned. It is quite common to condition a membrane prior to deployment. When delivered, a membrane is often stored in a storage liquid, e.g., water. The storage liquid is usually a non-solvent to the membrane. It often contains stabilizers, fungicides and the like. So, a membrane is often pre-conditioned in order to avoid contamination of product with water, fungicides and the like. The membrane is transferred from the storage liquid to an organic solvent, herein called conditioning solvent, which is at least to an extent compatible with both the storage solvent and the liquid organic phase. Common conditioning solvents are polar organic solvents, e.g., single- or polyvalent alcohols like ethanol, diethylene glycol, glycerol and so on, and combinations thereof. Pre-conditioning may comprise multiple steps, for example to prepare a membrane for purely aprotic solvents.

Membranes of the invention may have a thickness in the range from 5 to 100, or 10 to 100, or 20 to 80, 30 to 70, 40 to 80, 40 to 90, or 40 to 100 µm, by preference. The thickness of a membrane can be determined using Scanning electron microscopy (SEM).

This is an embodiment of the first aspect of the invention. It may be combined with any single other embodiment or plurality of embodiments of the first aspect of the invention.

Membranes of the invention may have a pore size in the range from 5 to 5'000 Å, for example 5 to 50, 5 to 30, 5 to 20, 5 to 10, or 10 to 50, 10 to 40, 10 to 30 or 10 to 20 Å by preference. The pore size of a membrane can be determined by Scanning electron microscopy (SEM) or Transmission electron microscopy (TEM).

This is an embodiment of the first aspect of the invention. It may be combined with any single other embodiment or plurality of embodiments of the first aspect of the invention.

Preferred membranes of the invention, including commercially available membranes, may be made from crosslinked polymers, such as polyimide (PI), polyacrylonitrile (PAN), silicone-coated PAN, poly-dimethyl siloxane (PDMS), crosslinked polyaniline (PANI) and modified poly(ether ether ketone) (PEEK).

This is an embodiment of the first aspect of the invention. It may be combined with any single other embodiment or plurality of embodiments of the first aspect of the invention.

In a preferred variant, membranes for separating additives from solvent may have a MWCO between 150 and 1000 Da.

A suited membrane for this purpose may be a Teflon AF2400/polyethylene membrane having a MWCO of about 150 g/mol and a solvent permeance of 3-8 L/m²/h/bar, as described in the Journal of Membrane Science, 602, p. 117972 (https://doi.org/10.1016/j.memsci.2020.117972).

This is an embodiment of the first aspect of the invention. It may be combined with any single other embodiment or plurality of embodiments of the first aspect of the invention.

Duramem membranes are also suited, available from EvonikResource Efficiency GmbH, Marl (Germany). MWCO can be selected from 150 to 900 Da. It is crosslinked polyimide. Puramem membranes of the same manufacturer with MWCO of 280 - 600 Da are also useful.

This is an embodiment of the first aspect of the invention. It may be combined with any single other embodiment or plurality of embodiments of the first aspect of the invention.

Solsep membranes from Solsep BV in Apeldoom (The Netherlands) are also suited. The Solsep membranes are mode from poly-dimethyl siloxane (PDMS). SolSep membranes are also available from 300 Da to 750 Da.

This is an embodiment of the first aspect of the invention. It may be combined with any single other embodiment or plurality of embodiments of the first aspect of the invention.

Koch SelRO membranes are suited. They consist of a PDMS layer coated on top of a PAN support which is crosslinked. These membranes have a MWCO of either 200 or 1000 Da.

This is an embodiment of the first aspect of the invention. It may be combined with any single other embodiment or plurality of embodiments of the first aspect of the invention.

Some ceramic membranes are also suited. They have a MWCO from around 200 to about 1000 Da. Commercial examples are Inopor membranes, available from Rauschert Distribution GmbH, Schesslitz (Germany).

This is an embodiment of the first aspect of the invention. It may be combined with any single other embodiment or plurality of embodiments of the first aspect of the invention.

In a preferred embodiment of the process of the invention the membrane in step iv) is surrounded at least on one, or on its both sides by the liquid organic phase. In another embodiment, a part of the membrane in step iv) may be at least partially not in contact with the liquid phase on at least one, or both sides. For example, up to 10 %, based on the passable membrane surface, is not in contact with the liquid organic phase on at least on side of the membrane.

This is an embodiment of the first aspect of the invention. It may be combined with any single other embodiment or plurality of embodiments of the first aspect of the invention.

In step v), organic phase remained in the raw product is removed from the raw product. A solid phase comprising the vinyl halide polymer is obtained thereby. According to the present invention, at least a part of step v) is performed by stripping. In general, any stripping method known to and considered applicable to the present process by a skilled person can be employed. Of these, some preference is given to application of stripping media selected from vapor stripping, steam stripping and gas stripping. Yet more preferred is steam stripping. Vapor, steam or gas employed in a stripper are also referred to as "stripping media".

In an embodiment of the present invention, the vinyl halide polymer obtained from step v) may have a lower content of additives than the plastic composition used for providing in step i). In another embodiment of the present invention, the content of additives in the vinyl halide polymer obtained from step v) is substantially equal to the content of additives in the plastic composition used for providing in step i). Substantially equal in this context means that the content of additives in the vinyl halide polymer obtained in step v) is not more than 5, 10, 15, 20, 30 or 40 % less than in the vinyl halide polymer provided in step i), the % referred to as relation of the amounts of additives in the respective vinyl halide polymer.

This is an embodiment of the first aspect of the invention. It may be combined with any single other embodiment or plurality of embodiments of the first aspect of the invention.

Generally spoken, a stripper is an apparatus comprising a tank, in which solvent is removed from a solution or solid, here referred-to as "raw product" by contacting the raw product with the stripping media, thereby evaporating the solvent. The stripping is carried out by injecting a stripping media, such as steam, vapor or gas generally from the bottom of a tank to bring the solvent in contact with steam. So, the tank is equipped with inlets for steam and raw product, outlets for the treated raw product, here referred to as "vinyl halide polymer", and depleted stripping media, which is formed by the injected stripping media and removed solvent. When using steam as stripping media, the depleted stripping media is a mixture of steam and /solvent. The depleted stripping media is usually condensed. The tank, i.e. the steam stripper may further comprise one or more exhausts, inserts like trays, downcomers, dual flow and baffle plates, showerdeck trays, ventilation, valves and so on. Further the tank may comprise flow plates, downcomer and/or packings. Packings can be of any type like stacked rings, random packings, pall ring, Raschig ring or tellerette packing. The rings and packings can be made by metal, ceramic and or plastic. It is possible to combine different types of packing.

This is an embodiment of the first aspect of the invention. It may be combined with any single other embodiment or plurality of embodiments of the first aspect of the invention.

In a further embodiment of the process of the invention according to the first aspect, the stripping in step v) is performed in a stripper employing a stripping media, wherein step v) is characterized by at least one, possibly some or even all of the following features:
[i] the raw product has a concentration of vinyl halide polymer of at least 10 wt.%;
[ii] the raw product has a viscosity at a temperature of 79 °C in the range from 0.01 to 10 Pa s;
[iii] wherein a stripping media is fed to the stripper in the lower section;
[iv] wherein the stripping media has a temperature in the range from 60 to 140 °C, e.g., from 90 to 120°C;
[v] wherein the stripping media is steam and recovered water is spread to the inner top of the stripper;
[vi] wherein the vinyl halide polymer is removed from the bottom of the stripper;
[vii] wherein the vinyl halide polymer is removed from the bottom of the stripper using a vibrating tube;
[viii] the pressure inside the stripper is in the range from 0.3 to 3 bars in the stripper;
[ix] the stripping media has a pressure in the range from 3 to 18 bars;
[x] The stripping tower comprises at least one insert.

This is an embodiment of the first aspect of the invention. It may be combined with any single other embodiment or plurality of embodiments of the first aspect of the invention.

As stated, combinations of two or more of the above features [i] to [x] may be preferred, e.g.: [viii] and [ix]; [viii], [ix] and [iv]; [ii], [viii] and [ix]; [ii], [viii], [ix] and [iv].

This is an embodiment of the first aspect of the invention. It may be combined with any single other embodiment or plurality of embodiments of the first aspect of the invention.

In an embodiment of the process of the invention, the raw product has a concentration of vinyl halide polymer of at least 10, 15, 20, 25, 30, 40, 50, 60, 70 or 80 wt.%, the wt.% with respect to the total amount of the raw product.

This is an embodiment of the first aspect of the invention. It may be combined with any single other embodiment or plurality of embodiments of the first aspect of the invention.

In an embodiment of the process of the invention, the raw product has a viscosity at a temperature of 79 °C in the range from 0.1 to 10 Pa s, for example from 0.1 to 8 Pa s, from 0.1 to 6 Pa s, from 0.1 to 4 Pa s, from 0.1 to 2 Pa s, from 0.3 to 8 Pa s, from 0.3 to 6 Pa s, from 0.3 to 4 Pa s, from 0.3 to 2 Pa s, from 0.5 to 8 Pa s, from 0.5 to 6 Pa s, from 0.5 to 4 Pa s, from 0.5 to 2 Pa s, from 0.8 to 8 Pa s, from 0.8 to 6 Pa s, from 0.8 to 4 Pa s, from 0.8 to 2 Pa s.

This is an embodiment of the first aspect of the invention. It may be combined with any single other embodiment or plurality of embodiments of the first aspect of the invention.

With regard to feature [iii], it may be preferred not to position the feed of the stripping medium at the bottom itself but in the lower region of the stripper.

This is an embodiment of the first aspect of the invention. It may be combined with any single other embodiment or plurality of embodiments of the first aspect of the invention.

In an embodiment of the process of the invention, the pressure in the stripper has a pressure in the range from 0.3 to 3 bar for example from 0.3 to 1 bar, or from 0.3 to 0.7 bar, from 0.3 to 2 bar, or from 0.5 to 2 bar, or from 1 to 3 bar, for example from 1.5 to 2.5 bar.

This is an embodiment of the first aspect of the invention. It may be combined with any single other embodiment or plurality of embodiments of the first aspect of the invention.

In an embodiment of the process of the invention, the stripping media, for example steam, vapor or gas, has a pressure in the range from 3 to 18 bar, for example from 5 to 18, 7 to 18, 9 to 18, 13 to 18 bar, or from 5 to 16, 5 to 14, 5 to 12 or from 5 to 10 bar, or from 7 to 18 bar, from 7 to 16 bar, from 7 to 14 bar, or from 7 to 12 bar, or from 9 to 18 bar, or from 11 to 18 bar.

This is an embodiment of the first aspect of the invention. It may be combined with any single other embodiment or plurality of embodiments of the first aspect of the invention.

As the two-step working up of the second composition, which comprises solute vinyl halide polymer, some combinations of features from step iv) and v) are further preferred.

This is an embodiment of the first aspect of the invention. It may be combined with any single other embodiment or plurality of embodiments of the first aspect of the invention.

In an embodiment of the process of the present invention, the stripping in step v) can be conducted in a continuous manner or a batch manner. Regarding continuous operation see above. When following a batch procedure, the stripping media is injected into a closed reactor in which the raw product has been provided. The vinyl halide polymer produced by the process is removed batchwise.

This is an embodiment of the first aspect of the invention. It may be combined with any single other embodiment or plurality of embodiments of the first aspect of the invention.

In a further embodiment of the process according to the first aspect of the invention, the process is designed and/or operated as a continuous process. In this case, the plastic composition, which comprises at least 10 wt.% of the vinyl halide polymer and one or more additives, the wt.% based on the total plastic composition, and the liquid organic phase are provided in step i) in form of two feed streams. These two feed streams are combined to dissolve the plastic composition in step ii) at least partially in the liquid organic phase, whereby a single stream of a base composition is formed, also referred to as base stream. This base stream is divided in step iii) into a first sub-stream comprising a first composition and a second sub-stream comprising a second composition, wherein the second sub-stream has a higher content of the vinyl halide polymer than the first sub-stream. Optionally, the dividing can be repeated with the second sub-stream of the same kind as before, wherein a resulting sub²-stream having an even higher content of the vinyl halide polymer etc. is obtained. Subsequently, the resulting second sub-stream comprising the vinyl halide polymer can be subjected to a splitting step iv), in which a solid phase comprising the vinyl halide polymer and a recovered organic phase are obtained, wherein the vinyl halide polymer has a lower content of additives that the initial plastic composition. Similarly, the first composition can be further split into a phase (solid or liquid) comprising the additives and a recovered organic phase. Further description regarding the dividing in step iii), and the splitting of step iv) and v) and the compositions obtained thereby can be transferred in analogy to the streams and products obtained in the continuous process. Similarly, the same membranes as described before can be used.

This is an embodiment of the first aspect of the invention. It may be combined with any single other embodiment or plurality of embodiments of the first aspect of the invention.

In another embodiment of the invention according to the first aspect the recovered organic phase is at least partially reused after performing the process by providing the recovered organic phase again as liquid organic phase in step i). This applies to both continuous and batch operation. For example, the liquid organic phase in step i) comprises an amount of at least 90, or 95 Vol.% of recovered organic phase. Ideally, the liquid organic phase in step i) is composed about fully, or 99 to 100 Vol% by recovered organic phase. This is also referred to as a "closed loop process". The Vol% in this context referring to the total amount of liquid organic phase present in step i).

This is an embodiment of the first aspect of the invention. It may be combined with any single other embodiment or plurality of embodiments of the first aspect of the invention.

In another embodiment of the fist aspect of the invention, the process of the invention may further comprise these steps:
{a} Providing a one recovered liquid selected from the first composition, the recovered organic phase and depleted stripping media, or a combination of two or all the three;
{b} Removing impurities from the recovered liquid using a separation technique thereby forming a recycled liquid; and
{c} Providing at least a part of the recycled liquid as liquid organic phase in step i).

This is an embodiment of the first aspect of the invention. It may be combined with any single other embodiment or plurality of embodiments of the first aspect of the invention.

The removing in step {b} can be performed by any means or separation technique known to and considered suited in the context of the present invention by a skilled person. For example, suited separation techniques may be selected from distillation, separation by membrane and so on. In an embodiment, suited membranes are those described previously with regard to step iv).

This is an embodiment of the first aspect of the invention. It may be combined with any single other embodiment or plurality of embodiments of the first aspect of the invention.

In an embodiment, these membranes may have the same features as those described with regard to step iv). In a further embodiment, the MWCO of these membranes is 600 Da or less, for example 400 Da or less, or in the range from 100 to 600 Da, or in the range from 100 to 400 Da. Suited commercial membranes are available, e.g., from Solsep, Puramem and KochSelro, as described above.

This is an embodiment of the first aspect of the invention. It may be combined with any single other embodiment or plurality of embodiments of the first aspect of the invention.

In a further embodiment, step {b} is performed at least in part at a temperature in the range from 20 to 120 °C and/or a pressure in the range from 2 to 80 bar, or both. Preferably, the same conditions as in step iv) can be selected in step {b}, for which reason reference is made thereto. Nevertheless, the conditions in step {b} and step iv) are selected independently from each other.

This is an embodiment of the first aspect of the invention. It may be combined with any single other embodiment or plurality of embodiments of the first aspect of the invention.

At least some, preferably all of the recycled liquid organic phase can be used as a liquid organic phase in step i). Yet more preferred, the liquid organic phase in step i) comprises an amount of at least 90 wt.% of recycled liquid.

This is an embodiment of the first aspect of the invention. It may be combined with any single other embodiment or plurality of embodiments of the first aspect of the invention.

In a further embodiment, the liquid organic phase in step i) comprises at least 10, or at least 20, 30, 40, 50, 60, 70, 80 or at least 90 wt.% of recycled liquid organic phase, based on the total amount of liquid organic phase in step i).

This is an embodiment of the first aspect of the invention. It may be combined with any single other embodiment or plurality of embodiments of the first aspect of the invention.

In a further embodiment, the liquid organic phase in step i) comprises virgin organic solvent in an amount of at most 90, or at most 70, 60, 50, 40, 30, 20, or at most 10 wt.%, for example at most 5 wt.% of virgin organic solvent, based on the total amount of liquid organic phase. Ideally, once started, the process does not require any virgin organic solvent beyond an initial amount.

This is an embodiment of the first aspect of the invention. It may be combined with any single other embodiment or plurality of embodiments of the first aspect of the invention.

In another embodiment of the process of the invention, the vinyl halide polymer obtained in the process comprises less than 1 wt.%, for example less than 0.5 wt.%, less than 0.2 wt.%, less than 0.1 wt.%, or less than 0.05 wt.% of organic solvent, the wt.% based on the total amount of the vinyl halide polymer.

This is an embodiment of the first aspect of the invention. It may be combined with any single other embodiment or plurality of embodiments of the first aspect of the invention.

Preferably, the vinyl halide polymer made by the process according to the first aspect of the invention comprises less than 10'000 ppm of additives. For example, in the range from 1'000 to 5'000 ppm additives. The amount of additives with respect to the total amount of vinyl halide polymer.

This is an embodiment of the first aspect of the invention. It may be combined with any single other embodiment or plurality of embodiments of the first aspect of the invention.

Preferably, the vinyl halide polymer made by the process according to the first aspect of the invention comprises less than 1'000 ppm of per additive. For example, in the range from 100 to 500 ppm per additive. The amount of additive with respect to the total amount of vinyl halide polymer.

This is an embodiment of the first aspect of the invention. It may be combined with any single other embodiment or plurality of embodiments of the first aspect of the invention.

Preferably, in the process according to the first aspect of the invention, the liquid organic phase in step i) comprises less than 40 wt.% of water, based on the total amount of liquid organic phase, for example 30 wt.% or less, or 20 wt.% or less, or 10 wt.% or less water. Often at least a bit of water, e.g. 0.1 wt.% are present in the liquid organic phase. The amount of water in a liquid organic phase can be determined by Karl-Fischer-Titration.

This is an embodiment of the first aspect of the invention. It may be combined with any single other embodiment or plurality of embodiments of the first aspect of the invention.

Preferably, in the process according to the first aspect of the invention, the base composition fed to dividing in step iii) comprises less than 40 wt.% of water, based on the total amount of the base composition, for example 30 wt.% or less, or 20 wt.% or less, or 10 wt.% or less, or 5 wt.% or less of water. Often at least a bit of water, e.g. 0.1 wt.% are present in the base composition. The amount of water in the base composition can be determined by Karl-Fischer-Titration.

This is an embodiment of the first aspect of the invention. It may be combined with any single other embodiment or plurality of embodiments of the first aspect of the invention.

Preferably, in the process according to the first aspect of the invention, the second composition fed to membrane separation in step iv) comprises less than 40 wt.% of water, based on the total amount of the second composition, for example 30 wt.% or less, or 20 wt.% or less, or 10 wt.% or less, or 5 wt.% or less of water. Often at least a bit of water, e.g. 0.1 wt.% are present in the second composition. The amount of water in the second composition can be determined by Karl-Fischer-Titration.

This is an embodiment of the first aspect of the invention. It may be combined with any single other embodiment or plurality of embodiments of the first aspect of the invention.

Preferably, in the process according to the first aspect of the invention, the raw product being fed into the stripper in step v) comprises less than 40 wt.% of water, based on the total amount of the raw product, for example 30 wt.% or less, or 20 wt.% or less, or 10 wt.% or less, or 5 wt.% or less of water. Often at least a bit of water, e.g. 0.1 wt.% are present in the raw product. The amount of water in the raw product can be determined by Karl-Fischer-Titration.

This is an embodiment of the first aspect of the invention. It may be combined with any single other embodiment or plurality of embodiments of the first aspect of the invention.

The vinyl halide polymer made by the process according to the first aspect of the invention may have at least 10 times less, for example at least 20 times less, at least 50 times less, at least 100 times less, for example from 10 to 1'000 -times, or from 10 to 100-times, or from 20 to 100-times less additives, per additive substance, than the plastic composition. The amount of additives in the vinyl halide polymer is based on the amount of vinyl halide polymer. The amount of additives in the plastic composition is given with respect to the amount of vinyl halide polymer therein.

This is an embodiment of the first aspect of the invention. It may be combined with any single other embodiment or plurality of embodiments of the first aspect of the invention.

The vinyl halide polymer made by the process according to the first aspect of the invention may have a content of less than 0.1 wt.%, for example less than 0.08, 0.06, 0.05, 0.04, 0.03, 0.02 or less than 0.01 wt.% of constituents other than vinyl halide polymer, so-called additives, the wt.% with respect to the total amount of vinyl halide polymer and other constituents. Often a content of 99.9 wt.% vinyl halide polymer is not exceeded.

This is an embodiment of the first aspect of the invention. It may be combined with any single other embodiment or plurality of embodiments of the first aspect of the invention.

The vinyl halide polymer made by the process according to the first aspect of the invention may have a content of less than 0.1 wt.%, for example less than 0.08, 0.06, 0.05, 0.04, 0.03, 0.02 or less than 0.01 wt.% of non-polymeric constituents, the wt.% with respect to the total amount of vinyl halide polymer and non-polymeric constituents. Often a content of 99.9 wt.% vinyl halide polymer is not exceeded.

This is an embodiment of the first aspect of the invention. It may be combined with any single other embodiment or plurality of embodiments of the first aspect of the invention.

The vinyl halide polymer made by the process according to the first aspect of the invention may have a content of more than 99 wt.%, for example more than 99.2, 99.4, 99.5, 99.6, 99.7, 99.8 or even more than 99.9 wt.% of non-polymeric constituents, the wt.% with respect to the total amount of vinyl halide polymer and non-polymeric constituents. Often a content of 99.9 wt.% vinyl halide polymer is not exceeded.

This is an embodiment of the first aspect of the invention. It may be combined with any single other embodiment or plurality of embodiments of the first aspect of the invention.

Preferably, the vinyl halide polymer made by the process according to the first aspect of the invention may have at least 10 times less, for example at least 20 times less, at least 50 times less, at least 100 times less, for example from 10 to 1'000 -times, or from 10 to 100-times, or from 20 to 100-times lead than the plastic composition. The amount of lead in the vinyl halide polymer is based on the amount of vinyl halide polymer. The amount of lead in the plastic composition is given with respect to the amount of vinyl halide polymer therein. Lead content can be determined by ICP-OES, see test method's section.

Sources of lead in the vinyl halide polymer and/or the plastic composition can be for example tribasic lead sulfate, dibasic lead phosphite, dibasic lead stearate, normal lead stearate, dibasic lead phthalate, and the like, as well as combinations of two or more thereof.

This is an embodiment of the first aspect of the invention. It may be combined with any single other embodiment or plurality of embodiments of the first aspect of the invention.

Preferably, the vinyl halide polymer made by the process according to the first aspect of the invention may have a content of less than 0.1 wt.%, for example less than 0.08, 0.06, 0.05, 0.04, 0.03, 0.02 or less than 0.01 wt.% of lead, the wt.% with respect to the total amount of vinyl halide polymer. Often a content of 99.9 wt.% vinyl halide polymer is not exceeded. The remainder to 100 wt.% is - besides of lead - further constituents, such as additives. Lead content can be determined by ICP-OES, see test method's section.

This is an embodiment of the first aspect of the invention. It may be combined with any single other embodiment or plurality of embodiments of the first aspect of the invention.

Preferably, the vinyl halide polymer made by the process according to the first aspect of the invention may have at least 10 times less, for example at least 20 times less, at least 50 times less, at least 100 times less, for example from 10 to 1'000 -times, or from 10 to 100-times, or from 20 to 100-times less di(2-ethylhexyl) phthalate (DEHP) than the plastic composition. The amount of DEHP in the vinyl halide polymer is based on the amount of vinyl halide polymer. The amount of DEHP in the plastic composition is given with respect to the amount of vinyl halide polymer therein. The amount of DEHP is determined by using HPLC with a mass spectrometer coupled thereto.

This is an embodiment of the first aspect of the invention. It may be combined with any single other embodiment or plurality of embodiments of the first aspect of the invention.

Preferably, the vinyl halide polymer made by the process according to the first aspect of the invention may have a content of less than 0.1 wt.%, for example less than 0.08, 0.06, 0.05, 0.04, 0.03, 0.02 or less than 0.01 wt.% of DEHP, the wt.% with respect to the total amount of vinyl halide polymer. Often a content of 99.9 wt.% vinyl halide polymer is not exceeded. The remainder to 100 wt.% is - besides of DEHP - further constituents, such as additives.

This is an embodiment of the first aspect of the invention. It may be combined with any single other embodiment or plurality of embodiments of the first aspect of the invention.

A second aspect of the invention is a vinyl halide polymer obtainable by a process as described regarding the first aspect of the invention or one or more of the embodiments relating thereto. Features and description relating to the first aspect of the invention and its embodiments are also applicable to the second aspect.

In an embodiment to the second aspect, the vinyl halide polymer comprises less than 0.1 wt.%, for example less than 0.08, 0.06, 0.05, 0.04, 0.03, 0.02 or less than 0.01 wt.% of constituents other than vinyl halide polymer, so-called additives, the wt.% with respect to the total amount of vinyl halide polymer and other constituents. Often a content of 99.9 wt.% vinyl halide polymer is not exceeded.

This is an embodiment of the first aspect of the invention. It may be combined with any single other embodiment or plurality of embodiments of the first aspect of the invention.

In another embodiment of the second aspect, the vinyl halide polymer comprises 0.001 to 0.5 wt.%, for example 0.001 to 0.3 wt.%, or 0.01 to 0.5 wt.%, or 0.01 to 0.3 wt.% of organic solvent. The organic solvent can be any one of those described with respect to the first aspect of the invention, for example methyl ethyl ketone. Preferably, the organic solvent is the one provided in the first aspect of the invention, i.e. the one used to form the base composition.

This is an embodiment of the first aspect of the invention. It may be combined with any single other embodiment or plurality of embodiments of the first aspect of the invention.

A third aspect of the invention is an article comprising a vinyl halide polymer obtainable by the process according to the first aspect of the invention or any one of its embodiments. Features and description relating to the first aspect of the invention and its embodiments are also applicable to the second aspect.

The article can be of any kind known to and considered suited by a skilled person. For example, the article may be selected from the group consisting of a fiber, a filament, a textile, a film and a formed body, such as pipe, tube or profile, or an object of more complex geometrical shape.

Another aspect of the invention is a method of manufacturing an article comprising a vinyl halide polymer obtainable by the first aspect of the invention. This method may include a providing of the vinyl halide polymer as a result from the process of the first aspect, and forming the vinyl halide polymer wherein the article is obtained.

A fourth aspect of the invention is a use of the vinyl halide polymer in an article, wherein the vinyl halide polymer is obtained by the process according to the first aspect of the invention or any one of its embodiments. Features and description relating to the first aspect of the invention and its embodiments are also applicable to the fourth aspect.

A fifth aspect of the invention is a use of a combined membrane separation and stripping process to remove volatile organic solvents from a vinyl halide polymer during recovery. This use may exhibit an improved energy efficiency compared with conventional processes for the removal of solvent from a product. Combined in this context refers to a two-step process.

A sixth aspect of the invention is a use of a membrane-stripper combination for the purification of a vinyl halide polymer, for example, for improving the purity of at least one vinyl halide polymer. This may be achieved conducting the process of the first aspect. Accordingly, description regarding the first aspect, in particular description related to the membrane and the process is also applicable to the fifth aspect. This aspect includes also a use of a membrane in a process of making a poly vinyl halide polymer whereby the purity of the vinyl halide polymer is improved. The process may be the one described in the first aspect and its embodiments. Again, features and description relating to the first aspect of the invention and its embodiments are also applicable to this aspect.

### FIGURES

The invention is illustrated below by means of figures by way of example. The figures are not to scale and are not intended to limit the invention.
Fig. 1 is a schematic presentation of the process according to first aspect of the invention.
Fig. 2 is a schematic presentation of an embodiment of the first aspect of the invention including a step iv), i.e. with solvent recovery
Fig. 3 is a schematic presentation of an embodiment of the first aspect of the invention including recovery of the organic phase and reuse in a closed loop.
Fig. 4 shows a setup of a batch process of the invention.
Fig. 5 shows a variant of the process with step iii) being multiple membrane separation steps.

### DESCRIPTION OF THE FIGURES

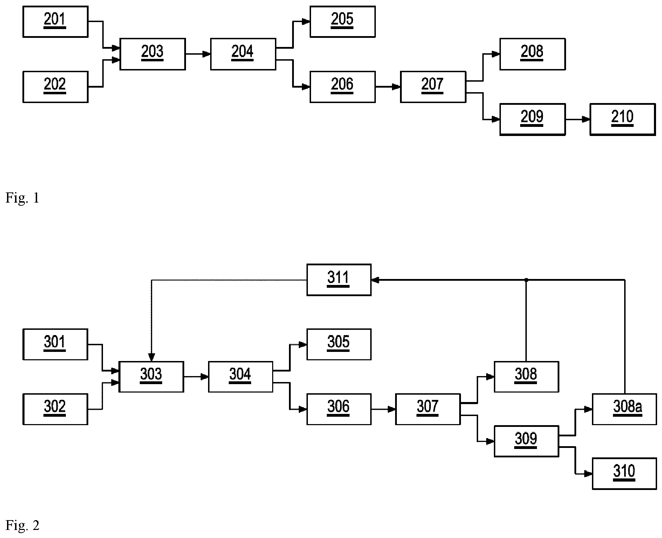

**Fig. 1** shows a schematic presentation of the process of the invention **200.** First, an organic phase **202** and milled scrap plastic composition incl. additives **201,** such as PVC waste from electrical wire insulation or construction materials like window frames, are provided in step i) and dissolved to give a base composition (no reference) in a step ii) **203.** The base composition is divided in step iii) **204** to give a 1^{st} composition **205** including organic phase and additives and a 2^{nd} composition **206** comprising organic phase and purified vinyl halide polymer. 2^{nd} composition **206** is split in step iv) **207** into a raw product phase of vinyl halide polymer **209** and recovered organic phase **208** using a membrane. Further organic phase is removed from the raw product phase **209** using a stripper, wherein solid vinyl halide polymer **210** is obtained.

**Fig. 2** shows a schematic presentation of a variant of the process of the invention **300.** First, an organic phase **302** and comminuted scrap plastic composition incl. additives **301,** such as PVC waste from electrical wire insulation or construction materials like window frames, are provided in step i) and dissolved to give a base composition (no reference) in a step ii) **303.** The base composition is divided in step iii) **304** to give a 1^{st} composition **305** including organic phase and additives and a 2^{nd} composition **306** comprising organic phase and purified vinyl halide polymer. 2^{nd} composition **306** is split in step iv) **307** into a raw product phase of vinyl halide polymer **309** and recovered organic phase **308** using a membrane. Further organic phase **308a** is removed from the raw product phase **309** using a stripper, wherein solid vinyl halide polymer **310** is obtained. The recovered phases **308** and further organic phase **308a** are fed via line **311** and optional solvent purification steps (not shown here) back into dissolution step ii) **303.**

### TEST METHODS

### [A] Molecular weight of vinyl halide polymer

The number averaged molecular weight of a sample of a vinyl halide polymer is determined using a calibrated GPC (gel permeation chromatography), running THF as mobile phase at a flux of 0.4 ml/min at 40 °C. The eluate signal was recorded using a refractive index analyzer. The technical equipment used was an EcoSEC Ambient Temperature System, equipped with one TSKgel SuperH4000 and a SUPERH3000 column with 6.0 mm ID×15 cm L, 3 µm particle size. Detector, pump oven and column oven were maintained at 40 °C. Calibration was made against polystyrene of narrow polydispersity, using a GPC calibration kit available from PSS GmbH, Mainz (Germany).

### [B] Metal analysis

Metal analysis is performed by ICP-OES (Inductively coupled plasma - optical emission spectrometry). For the ICP-OES analysis, a melting procedure is performed using addition of H₂SO₄, LiBO₂ and heating up the sample. After addition of water and HCl, the sample is analyzed by ICP-OES.

### [C] Plasticizer analysis

Plasticizer analysis was performed in double by a Soxhlet extraction using MTBE as solvent during at least 8h (2x1.5g PVC material; ±150ml methyl tert-butyl ether bp=55°C). The amount of extract (%) is determined gravimetrically. The extract is analyzed by NMR, HPLC-MS and GC-MS to identify and quantify the plasticizers.

### [D] Residual Solvent

Traces of solvent residual in recycled PVC were analyzed using head space gas chromatography with FID detection. 2 g of a sample were put in a 22ml vial and heated to 150 °C. 0.5 ml of headspace was injected in a Trace 1300 Interscience GC with autosampler TriPlus RSH and column Restek Rxi-624 Sil MS (length=60m, internal diameter=0.32mm, film thickness=1.8µm). Calibration curves were made by adding 9 different concentrations of MEK to a blanco suspension PVC powder. Helium gas was used as GC carrier gas.

### EXAMPLES

The invention is further illustrated by examples below. The invention is not limited to the examples.

### Example 1

50 g of PVC profile from building waste was added in 500 g methyl ethyl ketone (MEK) and stirred at 79°C for two hours whereby a heterogeneous liquid mixture was formed. This mixture comprising a solution of PVC in MEK and undissolved parts of PVC was filtered over a 100µm filter to remove the non-dissolved parts. The solution comprises PVC and additives specific for PVC profiles, like heat stabilizer, filler, TiO₂ pigments, impact modifier and so on. The solution was concentrated by passing at 50°C and under a pressure of 15 bars over a Duramem 150 membrane (MWCO = 150 Da, available from Evonik Resource Efficiency GmbH, Essen, Germany). The solute retentate from this step, which comprises the PVC and the PVC profile specific additives was precipitated by adding steam to the vessel, whereby solid r-PVC powder was obtained. MEK and (condensed steam) were recovered. Last traces of MEK in the solid r-PVC powder were removed in a fluid bed at 60°C during 20 minutes to reach residual MEK levels below 0.2 wt%.

### REFERENCE NUMERALS

- 201: Plastic composition incl. additives
- 202: Organic phase
- 203: Dissolving 201 in 202
- 204: separation into 204 and 205
- 205: 1^{st} composition (organic phase and additives)
- 206: 2^{nd} composition (vinyl halide polymer and organic phase)
- 207: Splitting into 208 and 209
- 208: Recovered organic phase
- 209: Raw product phase comprising vinyl halide polymer
- 210: Vinyl halide polymer (solid)

- 301: Plastic composition incl. additives
- 302: Organic phase
- 303: Dissolving 301 in 302
- 304: separation into 304 and 305
- 305: 1^{st} composition (organic phase and additives)
- 306: 2^{nd} composition (vinyl halide polymer and organic phase)
- 307: Splitting into 308 and 309
- 308: Recovered organic phase
- 308a: Further organic phase
- 309: Raw product phase comprising vinyl halide polymer
- 310: Vinyl halide polymer (solid)
- 311: Line to 303, optional purification (not shown here)

## Claims

1. A process of making a vinyl halide polymer comprising at least these steps:
i) Providing
[1] a plastic composition,
wherein the plastic composition comprises at least 10 wt.% of the vinyl halide polymer and one or more additives; and
[2] a liquid organic phase
wherein the liquid organic phase comprises at least an organic solvent;
ii) Forming a base composition by dissolving the plastic composition in the liquid organic phase at least partially;
iii) Dividing the base composition into a first composition and a second composition;
wherein the first composition has a higher content of additives than the second composition; and
wherein the second composition has a higher content of the vinyl halide polymer than the first composition;
iv) Splitting the second composition into a raw product and a recovered organic phase;
wherein at least a part of the splitting in step iv) is made by membrane separation;
v) Removing further organic phase from the raw product, wherein the solid phase comprising the vinyl halide polymer is obtained;
wherein at least a part of the removing in step v) is performed by stripping.

2. The process of claim 1, wherein the splitting in step iv) is **characterized by** at least one of these features:
(I) a membrane having a molecular weight cut-off (MWCO) in the range from 100 to 5 kDa;
(II) the second composition is under a pressure in the range from 2 to 100 bar;
(III) a temperature in the range from 20 to 120 °C;
(IV) the membrane is surrounded on its both sides by the liquid organic phase;
(V) an amount of recovered organic phase in the range from 5 to 90 Vol.%, the Vol.% based on the total volume of the second composition.

3. The process of claim 1 or 2, wherein the stripping in step v) is performed in a stripper employing a stripping media, wherein step v) is **characterized by** at least one of these features:
[i] the raw product has a concentration of vinyl halide polymer of at least 10 wt.%;
[ii] the raw product has a viscosity at a temperature of 79 °C in the range from 0.1 to 10 Pa·s;
[iii] the stripping media is fed to the stripper in the lower section;
[iv] the stripping media has a temperature in the range from 60 to 140 °C;
[v] the stripping media is steam and recovered water is spread to the inner top of the stripper;
[vi] the vinyl halide polymer is removed from the bottom of the stripper;
[vii] the vinyl halide polymer is removed from the bottom of the stripper using a vibrating tube;
[viii] a pressure in the range from 0.3 to 3 bars in the stripper;
[ix] the stripping media has a pressure in the range from 3 to 18 bars;
[x] The stripper comprises at least one insert.

4. The process of any one of the preceding claims, wherein the organic phase in step i) comprises at least 50 wt.% of an organic solvent, based on the total wt. of the organic solvent.

5. The process of any one of the preceding claims, wherein the at least one organic solvent of the organic phase in step i) is selected from the group consisting of ketones, ethers, aromatics, halogenated solvents, DMA, DMF and DMSO, and NADES.

6. The process of any one of the preceding claims, wherein the dissolving in step ii) is dine at a temperature in the range from 20 to 150 °C.

7. The process of any one of the preceding claims, wherein step ii) is **characterized by** at least one of these features:
(a) a temperature of both, the plastic composition and the liquid organic phase, in the range from 1 °C to 120 °C;
(b) step ii) is operated under a pressure in the range from 1 to 40 bars;
(c) a contacting time of at most 120 minutes;
(d) agitation of the base composition;
Or a combination of any two or more of the above.

8. The process of any one of the preceding claims, wherein a mixing device is used in step ii).

9. The process of any one of the preceding claims, wherein the dividing in step iii) is performed using a technique selected from one of these: filtration, membrane separation, deep filtration, centrifugation, decantation, rotating decanter, flotation, hydrocycloning.

10. The process of any one of the preceding claims, wherein the base composition is under a pressure in the range from 2 to 100 bar, the pressure given as gauge pressure.

11. The process of any one of the preceding claims, wherein the process is operated as a continuous process.

12. The process of any one of the preceding claims, wherein the membrane in step iv) comprises at least one polymer selected from the group consisting of polyolefin, polysulfone, polyethersulfone, fluoro polymer, polystyrene, polyimide, poly(vinylidene fluoride), cellulose, cellulose nitrate, cellulose acetate, polyacrylonitrile), poly(vinyl alcohol), poly (methacrylic acid), poly (methacrylic acid ester), poly(arylene ether ketone), poly(ether imide), polyaniline nanoparticles, poly(arylene ether sulfone) Polyether ether ketone, fluoro polymer, polypiperazinamide and polyethersulfonamide, and combinations thereof, such as, e.g., copolymers, blends and composites.

13. The process of any one of the preceding claims, wherein the vinyl halide polymer obtained in this step has a lower content of additives than the plastic composition in step i)

14. A vinyl halide polymer obtainable by a process according to any of the preceding claims.

15. The vinyl halide polymer according to claim 14 comprising less than 1 '000 ppm of additives, with respect to each additive.

16. An article comprising a vinyl halide polymer as in claims 14 to 15, or obtainable by the process according to any one of claims 1 to 13.

17. The article according to claim 16, wherein the article is selected from the group consisting of fiber, a filament, a textile, a film and a formed body, such as pipe, tube or profile, or an object of more complex geometrical shape.

18. A use of a combined membrane separation-stripping process to remove volatile organic solvents from a vinyl halide polymer during recovery.

19. A use of a membrane-stripper combination for the purification of a vinyl halide polymer.
